# EUROPEAN PATENT APPLICATION

(11) **EP 4 852 035 A1**
(43) Date of publication of application: **09.12.2026**
(21) Application number: 26174308.2
(22) Date of filing: 23.04.2026
(51) Int. Cl.: H01F 38/14, H01F 27/28, H02J 7/70, H02J 50/00, H02J 50/10, H02J 50/12

(54) **HIGHLY SCALABLE MULTI-LAYER BURIED-VIA-FREE OPTIMIZED WOVEN COPPER TRACE DESIGN FOR WIRELESS CHARGING**

(30) Priority: 05.06.2025 US 202519229550
(71) Applicant: TOYOTA MOTOR ENGINEERING & MANUFACTURING NORTH AMERICA, INC., Plano, TX 75024 (US)
(72) Inventor: LIU, Yanghe, Plano, Texas 75024 (US); KAMINENI, Abhilash, Logan, Utah 84322 (US); UKEGAWA, Hiroshi, Toyota-shi, Aichi-ken 471-8571 (JP); M. DEDE, Ercan, Plano, Texas 75024 (US); ROWE, Michael, Plano, Texas 75024 (US); MAU, Frederick, Plano, Texas 75024 (US)
(74) Representative: Cabinet Beau de Loménie

(57) **Abstract**

Devices, systems and methods are provided for an electrical coil, for wireless charging. For example, a mobile device case (2400) of the presently disclosed technology may comprise a coil repeater assembly (2420) attached to an interior surface of a case body (2410) of the mobile device case (2400) such that, when the mobile device case (2400) is attached to a mobile device (2430), an inductive coil of the coil repeater assembly (2420) is located proximate to a wireless charging coil in the mobile device (2430). The coil repeater assembly (2420) may comprise: (1) the inductive coil comprising turns of a trace bundle; and (2) the trace bundle comprising traces formed from trace segments electrically interconnected by interlayer connectors, a respective trace comprising electrically interconnected trace segments across multiple layers, wherein density of the traces varies across a length of the inductive coil.

## Description

### Cross-Reference to Related Applications

U.S. Patent Application No. 18/478,929 filed on September 29, 2023; U.S. Patent Application No. 18/949,656 filed on November 15, 2024, and U.S. Patent Application No. 18/771,653 filed on July 12, 2024 are incorporated herein by reference in their entirety and the skilled person can refer to them when considering the present disclosure.

### Technical Field

The present disclosure relates generally to electromagnetic coils, and, more particularly, some embodiments relate to electromagnetic coils for wireless charging.

### Description of Related Art

Electromagnetic coils are used in a wide variety of electrical applications in connection with the inductive transfer of power. For example, different forms of electrical coils are used in transformers, inductive power couplings and motors. Conventionally, electrical coils have been formed by wrapping a strand of wire into one or more loops.

The "skin effect," e.g., distribution of alternating current (AC) within a conductor near within a conductor so that the current density near the surface of the conductor is greater than at its core, causes the effective resistance of a conductor to increase with the frequency of the AC current. Litz wire has been used to reduce the skin effect, particularly in high frequency applications. Litz wire is a type that includes many thin wires, individually coated with an insulating film, and twisted together.

### Brief Summary of the Disclosure

According to various embodiments of the disclosed technology, a mobile device case is provided. The mobile device case may comprise: (1) a case body; and (2) a coil repeater assembly attached to an interior surface of the case body such that, when the mobile device case is attached to a mobile device, an inductive coil of the coil repeater assembly is located proximate to a wireless charging coil in the mobile device. The coil repeater assembly may comprise: (a) a first conductor layer comprising first trace segments; (b) a second conductor layer comprising second trace segments; (c) an insulating layer disposed between the first and second conductor layers; and (d) interlayer connectors electrically interconnecting segments of the first trace segments to segments of the second trace segments to form traces, wherein: (i) each trace of the formed traces comprises a respective subset of the first trace segments electrically interconnected by a subset of the interlayer connectors to a corresponding subset of the second trace segments such that the interconnected trace segments are woven through and around the insulating layer, and (ii) the traces are formed as a conductive line woven through and around the insulating layer to form the inductive coil of the coil repeater assembly.

In some embodiments of the mobile device case, density of the traces may vary across a length of the inductive coil. For example, a first density of the traces at a first location on the inductive coil may be greater than a second density of the traces at a second location on the inductive coil, wherein the first location is closer to a center of the inductive coil than the second location. In certain of such implementations, the density of the traces may be greater at higher current locations of the inductive coil than lower current locations of the inductive coil. In some of such implementations, the density of the traces may be based on spacing between trace segments of a respective conductor layer. In various implementations, the density of the traces may be based on spacing between the interlayer connectors.

In some embodiments of the mobile device case, a trace segment of a respective conductor layer may extend in a linear direction and parallel to other trace segments of the respective conductor layer.

In certain embodiments of the mobile device case, the first trace segments of the first conductor layer may cross over the second trace segments of the second conductor layer.

In various embodiments of the mobile device case, the interlayer connectors may be disposed on an outer perimeter of the insulating layer.

In some embodiments of the mobile device case, the interlayer connectors may comprise through vias filled with a conductive material.

In certain embodiments of the mobile device case, the coil repeater assembly may further comprise: (a) a substrate disposed between the inductive coil and the interior surface of the case body; and (b) a tuning capacitor electrically coupled to each end of the inductive coil. In some of such implementations, the coil repeater assembly may exclude electrical connection to an active component that supplies power. In certain of such implementations, the substrate may comprise an adhesive that attaches the substrate to the interior surface of the case body. For example, the substrate and the adhesive may be non-conductive.

In various embodiments of the mobile device case, the traces may be ink-printed.

In various embodiments of the presently disclosed technology, a second mobile device case is provided. The second mobile device case may comprise: (1) a case body; and (2) a coil repeater assembly attached to an interior surface of the case body such that, when the mobile device case is attached to a mobile device, an inductive coil of the coil repeater assembly is located proximate to a wireless charging coil in the mobile device, wherein the coil repeater assembly comprises: (a) the inductive coil comprising turns of a trace bundle; and (b) the trace bundle comprising traces formed from trace segments electrically interconnected by interlayer connectors, a respective trace comprising electrically interconnected trace segments across multiple layers, wherein density of the traces varies across a length of the inductive coil.

In some embodiments of the second mobile device case, a first density of the traces at a first location on the inductive coil may be greater than a second density of the traces at a second location on the inductive coil, wherein the first location is closer to a center of the inductive coil than the second location.

In certain embodiments of the second mobile device case, the density of the traces may be greater at higher current locations of the inductive coil than lower current locations of the inductive coil.

In various embodiments of the presently disclosed technology, a coil repeater assembly for wireless charging of a mobile device is provided. The coil repeater assembly may comprise: (1) a substrate; (2) an adhesive disposed on a first surface of the substrate; and (3) a wireless charging repeater circuit on a second surface of the substrate opposite the first surface of the substrate, wherein the wireless charging repeater circuit comprises: (a) an inductive coil comprising turns of a trace bundle; and (b) the trace bundle comprising traces formed from trace segments electrically interconnected by interlayer connectors, a respective trace comprising electrically interconnected trace segments across multiple layers, wherein density of the traces varies across a length of the inductive coil.

In some embodiments of the coil repeater assembly, a first density of the traces at a first location on the inductive coil may be greater than a second density of the traces at a second location on the inductive coil, wherein the first location is closer to a center of the inductive coil than the second location.

Other features and aspects of the disclosed technology will become apparent from the following detailed description, taken in conjunction with the accompanying drawings, which illustrate, by way of example, the features in accordance with embodiments of the disclosed technology. The summary is not intended to limit the scope of any inventions described herein, which are defined solely by the claims attached hereto.

### Brief Description of the Drawings

The present disclosure, in accordance with one or more various embodiments, is described in detail with reference to the following figures. The figures are provided for purposes of illustration only and merely depict typical or example embodiments.
FIGS. 1A-1C are view of an example printed circuit board (PCB) coil in accordance with embodiments of the present disclosure.
FIGS. 2A-2C depict examples of various trace densities in accordance with embodiments disclosed herein.
FIGS. 3A-3C illustrates an example four layer implementation of PCB coil in accordance with an embodiment of the present disclosure.
FIGS. 4A-4C illustrates an example six layer implementation of PCB coil in accordance with an embodiment of the present disclosure.
FIG. 5 is a schematic block diagram of an example PCB coil having varying coil density in accordance with embodiments of the present disclosure.
FIGS. 6A and 6B illustrate examples of interlayer connectors in accordance with embodiments of the present disclosure.
FIGS. 7A through 7D-2 depict a flow diagram of an example method of manufacturing a PCB coil in accordance with embodiments of the present disclosure.
FIG. 8 is an example of a mulita-route design in accordance with an embodiment of the present disclosure.
FIG. 9 illustrates example of corner connections in fabricating a PCB coil in accordance with embodiments of the present disclosure.
FIG. 10 shows changing trend of Q-factor for various PCB coils in accordance with embodiments of the present disclosure.
FIG. 11 shows a typical wireless charging system.
FIG. 12 provides a block diagram illustrating a conventional wireless charging configuration for a mobile device.
FIG. 13 provides a diagram illustrating an example of an improved wireless charging configuration for a mobile device according to one or more embodiments.
FIG. 14 provides a diagram illustrating an example of a mobile device case with a coil repeater assembly for wireless charging according to one or more embodiments.
FIG. 15A provides a diagram illustrating an example of a coil repeater assembly for wireless charging according to one or more embodiments.
FIG. 15B provides a diagram illustrating an example circuit of tuning capacitors for use in a coil repeater assembly according to one or more embodiments.
FIG. 16 provides a diagram illustrating another example of a coil repeater assembly for wireless charging according to one or more embodiments.
FIG. 17 provides a diagram illustrating another example of a coil repeater assembly for wireless charging according to one or more embodiments.
FIG. 18A provides a diagram illustrating an example of a stacked arrangement of coil repeater assemblies according to one or more embodiments.
FIG. 18B provides a diagram illustrating an example circuit of a stacked arrangement of coil repeater assemblies according to one or more embodiments.
FIGs. 19A-19B provide diagrams illustrating examples of case bodies for a mobile device case according to one or more embodiments.
FIG. 20 provides a flow diagram illustrating an example method of constructing a mobile device case with a coil repeater assembly for wireless charging according to one or more embodiments.
FIG. 21 provides a diagram illustrating an example of a mobile device case with a microchannel coil for wireless charging according to one or more embodiments.
FIG. 22 provides a flow diagram illustrating an example method of constructing a mobile device case with a microchannel coil for wireless charging according to one or more embodiments.
FIG. 23 provides a diagram illustrating an example of a coil repeater assembly for wireless charging according to one or more embodiments.
FIGs. 24A-24C provide diagrams illustrating examples of mobile device cases with a coil repeater assembly for wireless charging according to one or more embodiments.
FIG. 25 provides a flow diagram illustrating an example method of constructing a mobile device case with a coil repeater assembly for wireless charging according to one or more embodiments.
FIG. 26 provides a flow diagram illustrating an example method of providing wireless charging for a mobile device in a vehicle according to one or more embodiments
FIG. 27 is an example computing component that may be used to implement various features of embodiments described in the present disclosure.

The figures are not exhaustive and do not limit the present disclosure to the precise form disclosed.

### Detailed Description

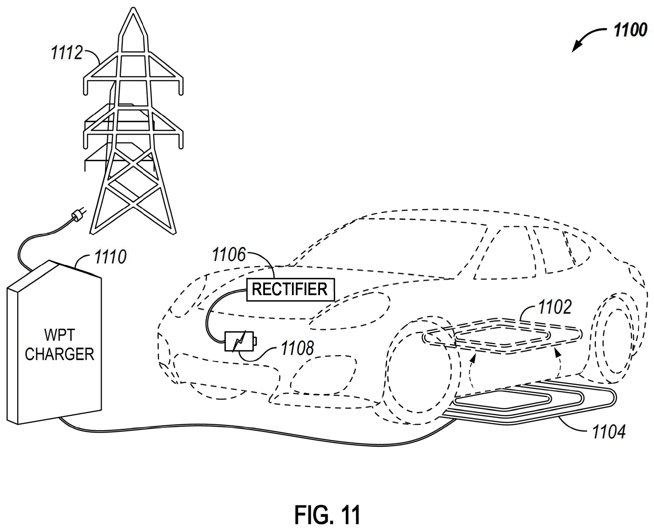

As alluded to above, electromagnetic coils are used in a variety of electrical applications in connection with the inductive transfer of power, such as wireless power transfer for power exchange in electrical vehicle applications. Wireless power transfer has been widely researched and developed due to its ease of use and elimination of manual power plugging. This technology has gained attention from not only the low-power consumer electronics industry but also the high-power electric vehicle (EV) wireless charging community. A typical wireless charging system 1100 is shown in FIG. 11, which includes an electric vehicle 1102 having a receiver coil 1104 installed on a chassis of the electric vehicle 1102. Wireless power transfer utilizes a magnetic field to transfer power wirelessly from an energized transmitter pad (or ground-based infrastructure) 1106, having a transmitter coil 1112, to the receiver coil 1104. Conventionally, the receiver and transmitter coils have dimensions of 350 mm x 350 mm with an air space of around which the coil turns. The air space may be, for example, 150mm -250mm for a passenger vehicle wireless charging. After the receiver coil absorbs the magnetic field in the form of AC power, a rectifier 1108 converts the power into DC current to charge the vehicle main battery 1110. The power transfer efficiency relies on many factors such as, but not limited to, air gap between the receiver coil 1104 and the transmitter coil 1112, alignment between the coils, coil compatibility (e.g., matching of resonance frequencies), etc.

As discussed above, performance of the power transfer of a wireless charging system, such as that shown in FIG. 11, can be negatively impacted by the skin effect that causes an increase in effective resistance within the coils. This increased effective resistance can result in temperature fluctuations and reduced power coupling between the coils. To reduce the skin effect, electromagnetic coils used in high frequency applications are often wound from Litz wire.

Litz wire is a type of wire that includes many wires, individually coated with an insulating film, and twisted together. The individual wires are combined and twisted following a prescribed pattern often involving several levels of twisting (groups of twisted wires twisted together, etc.). Due to the combination of separate smaller wires, the conductor formed from a Litz wire can have a greater surface area than a conventional solid conductor, thereby reducing the skin effect. As a result of this and the twisting configuration, the power losses associated with Litz wire coils can be substantially lower than conventional solid wire coils when used in high-frequency applications.

However, conventional Litz wires suffer from a number of disadvantages. For example, the resistance of a Litz wire coil is higher than theoretically achievable because individual strands are round and coated with an insulator so that the overall cross-section includes a substantial amount of non-conducting elements, such as air and insulator. Additionally, the conductors are thermally insulated and lack a heat-carrying path aside from the conductors themselves. As a result, power handling by a Litz wire may be need to be reduced to account for thermal considerations. Furthermore, the manufacturing process for Litz wire and Litz wire coils is expensive and intricate, requiring special, costly equipment. For example, in wireless charging coil applications, a Litz wire coil can include at least 800 individual strands that are twisted together to collectively form the conductor, which then needs to be wound to form the coil itself. Further, a Litz wire may be bulkier than desired for some applications because of packing density from wire to wire and the space occupied by the insulation between strands.

To address these issues, among others, a coil can be formed directly into a printed circuit board (PCB), for example, by forming the coil on the circuit board. While some prior art approaches have attempted to form coils in PCB, these conventional printed circuit board coils suffer from certain short comings and difficulties. For example, some conventional PCB coils rely on non-standard PCB manufacturing techniques, such as using blind or buried vias to connect layers of a PCB. These vias require expensive and non-standard manufacturing techniques that complicate the manufacturing of and increase costs associated with the conventional PCB coils. Additionally, the conventional PCB coils are not scalable to different size coils, power levels, etc. This may be due to the design. For example, when designing a planar coil on PCB for wireless charging, the size and power level requirements are defined and the design is made to meet these parameters. Thus, the coil designed may be specific for meeting these requirements, such as physical constraints, inductance, resonance and magnetic field distribution. Furthermore, conventional PCB coils can suffer from uneven distribution of induced current and inductance within the PCB coil. Further, stacked PCB coils can introduce unwanted parasitic capacitance due to some of the coils receiving more of the magnetic field than others. Ultimately, this can result in higher resistance leading to thermal considerations as power requirements increase.

Accordingly, embodiments disclosed herein provide for methods and devices that replaces conventional Litz wire and conventional PCB coils with a scalable PCB coil for fitting various charging applications with different power levels, size requirements, etc. The embodiments disclosed herein provide this scalability while maintaining high power transfer efficiency and high power handling. For example, embodiments disclosed herein begin with a unit cell design, which can be repeated in multiple layers and scaled to any number of planar sizes.

In some embodiments, a PCB coil is provided that includes a plurality of conductor layers and one or more substrate or insulator layers. The conductor layers may be provided as any conductive material known in the art, for example but not limited to, copper. Each one or more insulator layers is provided between two conductor layers. Thus, the number of insulator layers may be one less than the number of conductor layers. Each conductor layer can comprise a plurality of trace segments formed therein. A plurality of interlayer connectors are fabricated that interconnect trace segments of different conductor layers to form one or more traces. These traces may function similar to a strand of wire in a conventional Litz wire. The interlayer connectors may be provided as through vias formed at an edge of the insulator layer, with the trace segments extending across the insulator layer from one through via on one edge to another through via on another edge. As such, the trace winds or is twisted around the insulating layer. The one or more traces collectively provide for a trace bundle that can then be formed into a coil structure to provide the PCB coil.

Each trace may comprise a trace density based on spacing between each trace segment and spacing between each interlayer connector forming the trace. For example, a smaller spacing between trace segments and/or interlayer connectors translates to higher density (e.g., more trace segments per unit of distance) and larger spacing translates to a lower density. In some embodiments, the density of the traces can be varied as a function of location along the PCB coil. By varying the trace density, current propagating in the coil can be controlled which can address thermal considerations. For example, a higher density of traces can be formed to reduce thermal properties, such as temperatures, which permit larger currents through the coil. A lower density can be used where thermal considerations are less prominent. For example, if thermal considerations are of less prominent, a lower density can carry enough power with higher temperature but reduce total weight and material cost.

A nonlimiting advantage of the embodiment disclosed herein is that it can be extended to any size or number of PCB layers as needed for any desired application. For example, power level and physical installation space can vary significantly for different grades of vehicles (e.g., commercial vehicles compared to consumer vehicles, hybrid vehicles compared to fully electric vehicles, a car compared to a truck, etc.). Conventional PCB coils and Litz wires require a special design of the receiver coil on the vehicle, for example, based on design space, gap, power level, thermal requirements, and electrical requirements. Whereas, embodiments disclosed herein provide for scalability through a base trace design pattern that can be repeated at design stages to form trace bundles and extended to multiple PCB layers, as well as varied in physical size, without redesigning the base trace pattern. This base trace design pattern (e.g., the unit cell), which defines the trace segments and interlayer connectors forming a single trace route, can be provided according to the power and space needs of a given application and then repeated to provide multiple traces. Parameters, such as trace segment lengths, spacings, etc., that define the base trace pattern can adjusted as desired without requiring a redesign of the base pattern. Thus, embodiments disclosed herein can be implemented for any n space, gap, power level, thermal requirements, and electrical requirements.

It should be noted that the terms "optimize," "optimal" and the like as used herein can be used to mean making or achieving performance as effective or perfect as possible. However, as one of ordinary skill in the art reading this document will recognize, perfection cannot always be achieved. Accordingly, these terms can also encompass making or achieving performance as good or effective as possible or practical under the given circumstances, or making or achieving performance better than that which can be achieved with other settings or parameters.

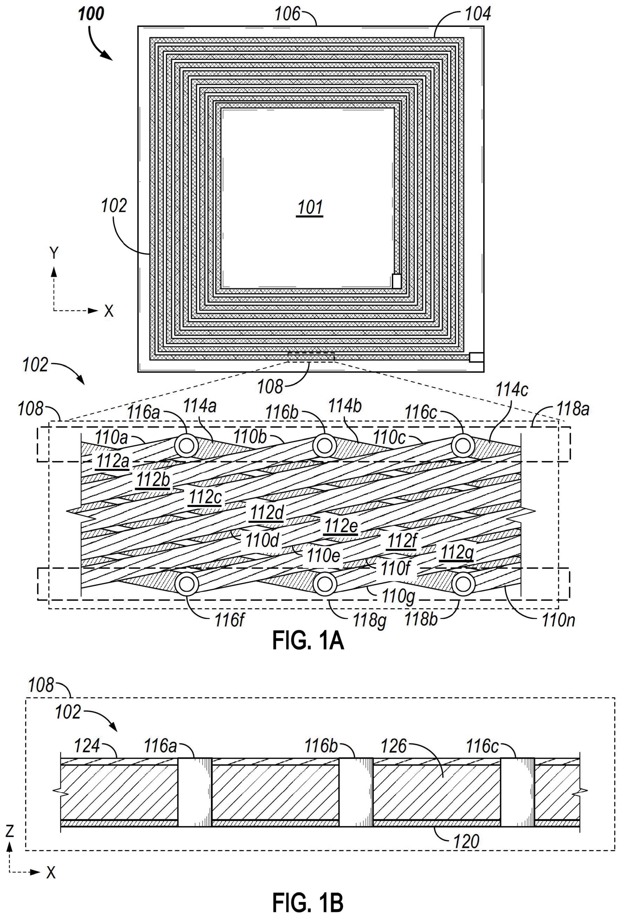

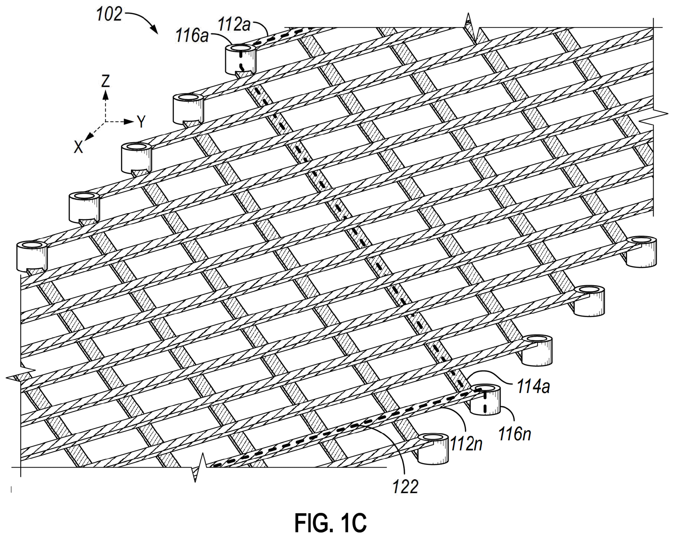

FIG. 1A is a top down view of an example PCB coil 100 in accordance with embodiments of the present disclosure. The PCB coil 100 includes a trace bundle 102 wound through a plurality of turns or loops around air space 101 to form a coil 104 on a substrate 106. FIG. 1B illustrates a side view of a portion the trace bundle 102 and FIG. 1C depicts a perspective view of a portion of the trace bundle 102 with the substrate 106 removed for illustrative purposes only to assist with ease of understanding and as relative orientation between parts.

FIG. 1A includes zoomed in view 108 which depicts an enlargement of a portion of trace bundle 102. As shown in the view 108, the trace bundle 102 comprises a plurality of individual trace (or trace strands) 110a-110n (collectively referred to herein as traces 110) that are twisted or wound around portions of substrate 106 to form the trace bundle 102. The portions of substrate 106 around which traces 110 are wound can be considered insulating layers 126, which are shown in FIG. 1B. In this example, six traces 110 are shown, but any number of traces may be provided as desired. The traces may be formed of a conductor, such as, but not limited to, copper.

Each trace 110 is formed from trace segments 112a-112n (collectively referred to herein as trace segments 112) and trace segments 114a-114n (collectively referred to herein as trace segments 114) that are connected by interlayer connectors 116a-116n (collectively referred to herein as interlayer connectors 116). As an illustrative example, trace 110a is shown comprising a trace segment 112a that is connected to a trace segment 114a by an interlayer connector 116a. This pattern of connection is repeated along the length of the trace bundle 102. The interlayer connectors 116 may be provided at outer perimeters or edge regions 118a and 118b of trace bundle 102, with the trace segments 112 and 114 extending linearly across the trace bundle 102 from an interlayer connectors 116 to another interlayer connectors 116 on edge region 118b. Thus, each trace segment 112 can be substantially parallel to other trace segments 112 and each trace segment 114 can be substantially parallel to other trace segments 114. Both trace segments extend linearly in the X-axis direction, but in opposite directions along the Y-axis, in this example.

As shown in FIG. 1B, trace segments 112 can be formed in a conductor layer 124 on a first (e.g., upper) side of insulating layer 126 and trace segments 114 can be in from a conductor layer 120 on a second or opposite (e.g., bottom) side of insulating layer 126. Interlayer connectors 116 interconnect one of trace segments 112 to one of trace segments 114. Thus, each trace segment of a given layer can be substantially parallel to other trace segments of the same layer. The interlayer connectors 116 can be formed on the outer perimeter or edge regions 118a and 118b of insulating layer 126. Trace segments and interlayer connectors can be formed using any PCB manufacturing techniques as known in the art. Reference to upper and bottom side are provided as examples to assist with ease of understanding and as relative orientation between layers. Reference to upper and bottom are not intended to limit the disclosure to vertical orientations.

Each trace 110 follows a trace route that winds around the insulating layer 126. FIG. 1C depicts an example trace route 122 for trace 110a, through which trace segment 112a is connected to trace segment 114a via interlayer connector 116a and trace segment 114a is connected to trace segment 112n via interlayer connector 116n. In this example, each trace segment extends linearly from one interlayer connector 116 to the next, without deviation from the trace route. As a result, in the example shown in FIG. 1C, trace 110 is wound around an insulating layer 126 forming a generally rectangular helical pattern having rotations or turns in a first direction (e.g., Z-axis direction) and translations along a plane perpendicular to the first direction (e.g., X-Y plane in this example).

In operation, an alternating current (AC) can be applied to the trace bundle 102, which will flow in substantially equal amounts in each of the individual traces 110. Because the current may be distributed uniformly across the strands, the AC resistance may be reduced. In embodiments, system trade-offs such as number and size of individual traces, numbers of layers of the PCB coil, connection complexities, board space, and the like, may be considered to determine the optimum routing pattern and design.

In embodiments, trace bundle 102 can be reproducible and scalable through repeated routing of multiple trace 110a-110n. For example, the trace bundle 102 can be formed by repeating the trace route 122 for each trace 110 and providing a spacing or gap between each adjacent trace 110. By repeating the trace route 122 with a different starting point spaced apart from a neighboring trace 110, a plurality of traces 110 can be formed having a common shape with a spacing therebetween in the X-Y plane. As a result, the trace bundle 102 can comprise a number of helical patterns, as shown in FIG. 1C, twisted around insulating layer 126. Scalability can be achieved by altering starting points, spacings, and dimensions of the various components to form traces of desired dimensions.

While the examples of FIGS. 1A-1C illustrate a portion of trace bundle 102 that extends along the X-axis direction, the coil 104 comprises similar structural configurations for other positions of trace bundle 102 of other orientations. For example, a length of trace bundle 102 that extends in the Y-axis direction (e.g., right or left sides of PCB coil 100 in FIG. 1A) would have a similar structure as that shown FIGS. 1A-1C, but with an orientation rotated according to the changed orientation of the length of trace bundle 102.

Furthermore, with reference to the example axes shown in FIGS. 1A-1C, the axes are provided as examples to assist with ease of understanding and as relative orientation between parts. The axes are not intended to limit the disclosure to horizontal or vertical directions.

In embodiments, design parameters of a trace bundle 102 can varied to achieve differing trace densities. Trace density may be controlled based on spacing between routes of each traces 110a-110n and by the patterned geometry of the trace bundle 102. The location of the interlayer connectors 116 on the outer perimeter can enable scaling and replication of the pattern as well as tight and uniform individual trace placement and density since the interlayer connectors are not used within the trace segments themselves, potentially disrupting uniformity of the pattern and the density of the pattern. For example, spacing between adjacent interlayer connectors 116 can be adjusted which translates to an adjustment of the spacing between the connected trace segments.

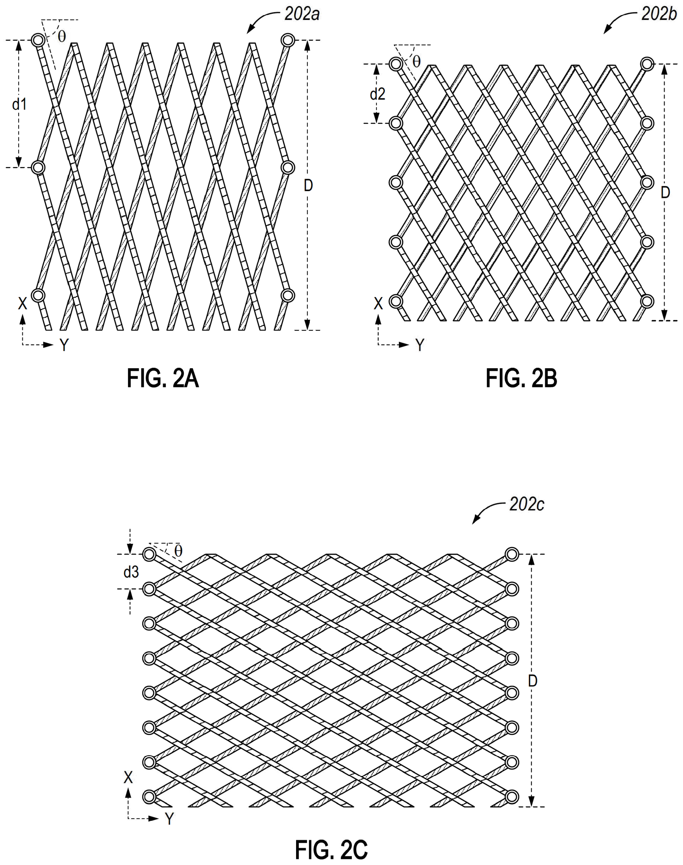

FIGS. 2A-2C depict examples of different trace densities in accordance with embodiments disclosed herein. FIGS. 2A-2C show portions of trace bundles 202a-202c, respectively, each of which may be substantially the same as trace bundle 102 of FIGS. 1A-1C, except that the trace density is differed between each trace bundle. FIG. 2A shows a length D of trace bundle 202a having a first trace density, FIG. 2B shows the length D of trace bundle 202b having a second trace density that is higher than the first trace density, and FIG. 2C shows the length D of trace bundle 202c having a third trace density that is higher than the second trace density (e.g., increased number of trace segments per unit length).

In each figure, the length of each portion of the respective trace bundle is the same, denoted as distance D, but the distance between adjacent interlayer connectors is changed. For example, FIG. 2A shows a distance of d1 between adjacent interlayer connectors, while FIG. 2B shows a distance of d2, which is smaller than d1. Similarly, FIG. 2C show s distance of d3 between adjacent interlayer connectors, which is smaller than d2. As a result, the angle θ formed between trace segments and the Y-axis decreases as the distance between interlayer connectors decreases. The spacing between trace segments also decreases with decreased distance between interlayer connectors. Thus, an increased number of trace segments, and therefore traces, are present within distance D of the trace bundle.

Returning to FIGS. 1A-1C, coil 104 is shown as an example of a two-layer PCB coil, having two conductors layers each having a plurality of trace segments that are interconnected by the interlayer connectors to define traces 110. However, embodiments disclosed herein can be extended to more than two layers, for example, a four-layer PCB coil, six-layer PCB coil, eight layers, to as many layers as desired. In each case, an insulating layer is provided between two neighboring conductor layers. Thus, the number of insulating layers is N-1, where N is the number of conductor layers. Through the multi-layer structure, a trace bundle (such as trace bundle 102) can include a number of sub-bundles. Each sub-bundle may be defined by a pair of conductor layers having trace segments formed thereon and interconnected by interlayer connectors forming traces that wind around one or more insulating layers. In embodiments, providing additional layers may function to increase trace density as there more layers means that more traces are present with a length of the coil 104. This approach to varying the trace density can be used alone or in tandem with the adjusting of spacing between interlayer connectors discussed above.

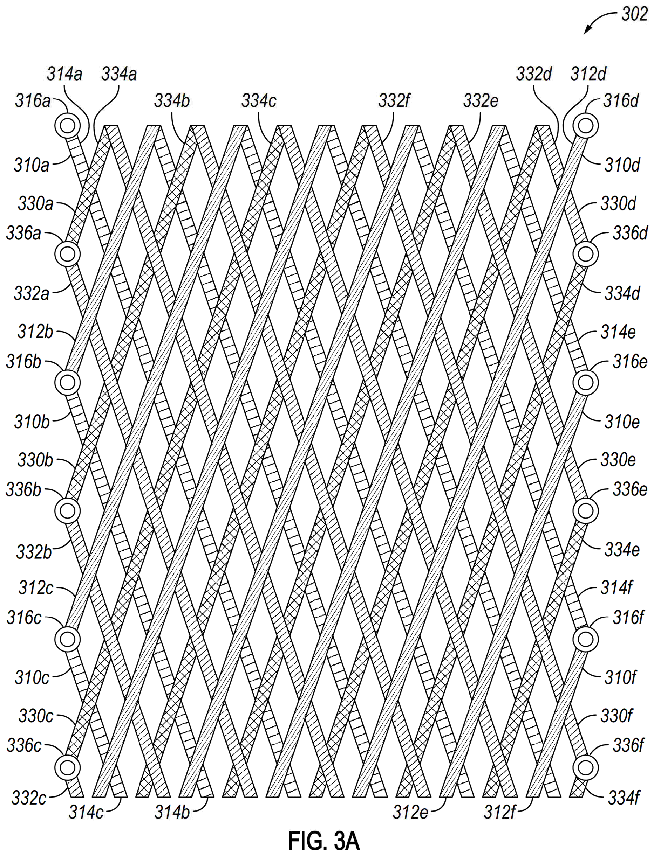

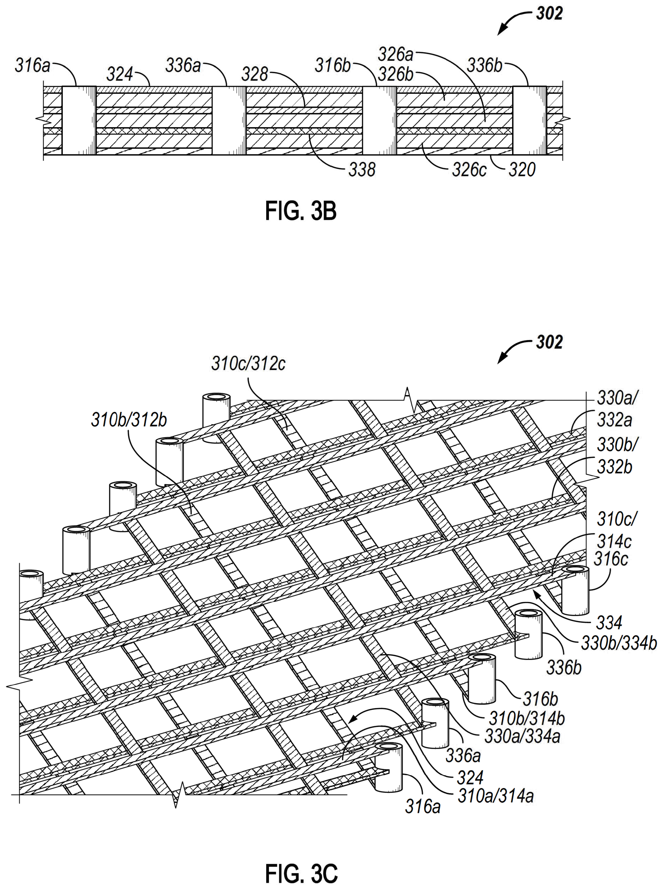

FIGS. 3A-3C illustrates an example four layer trace bundle 302 in accordance with an embodiment of the present disclosure. Trace bundle 302 may be included as part of a four layer PCB coil. FIG. 3A is a top down view of a portion the trace bundle 302, FIG. 3B is a side view of a portion the trace bundle 302, and FIG. 3C is a perspective view of a portion of the trace bundle 302 with the insulating layers removed for illustrative purposes only to assist with ease of understanding and as relative orientation between parts.

In the example of FIGS. 3A=3C, trace bundle 302 comprises a first plurality of traces 310 and a second plurality of traces 330 that are twisted or wound around one or more of insulating layers 326a-326c to form the trace bundle 302. In this example, traces 310 may provide a first sub-bundle and traces 330 provide a second sub-bundle. In the example shown in FIG. 3A, eight traces 310 and eight traces 330 are shown, but any number of traces may be provided as desired. The traces may be formed of a conductor, such as, but not limited to, copper.

Each trace 310 is formed from trace segments 312a-312n (collectively referred to herein as trace segments 312) and trace segments 314a-314n (collectively referred to herein as trace segments 314) that are connected by interlayer connectors 316a-316n (collectively referred to herein as interlayer connectors 316).

Each trace 330 is formed from trace segments 332a-332n (collectively referred to herein as trace segments 332) and trace segments 334a-334n (collectively referred to herein as trace segments 334) that are connected by interlayer connectors 336a-336n (collectively referred to herein as interlayer connectors 336).

As shown in FIG. 3B, trace segments 312 can be formed in a conductor layer 324 on a first (e.g., upper) side of insulating layer 326a and trace segments 314 can be formed in a conductor layer 320 on a bottom side of insulating layer 326c. Further, trace segments 332 can be formed in a conductor layer 328 between a bottom side of insulating layer 326a and a first (e.g., upper) side of insulating layer 326b and trace segments 334 can be formed in a conductor layer 338 between a bottom side of insulating layer 326b and an upper side of insulating layer 326c. Interlayer connectors 336 interconnect one of trace segments 312 to one of trace segments 314, while interlayer connectors 336 interconnect one of trace segments 332 to one of trace segments 334.

Thus, each trace 310 and 330 follows a trace route that winds around one or more of insulating layers 326a-326c. For example, each trace 310 winds around each of insulating layer 326a-326c, each trace 330 winds around insulating layer 326b.

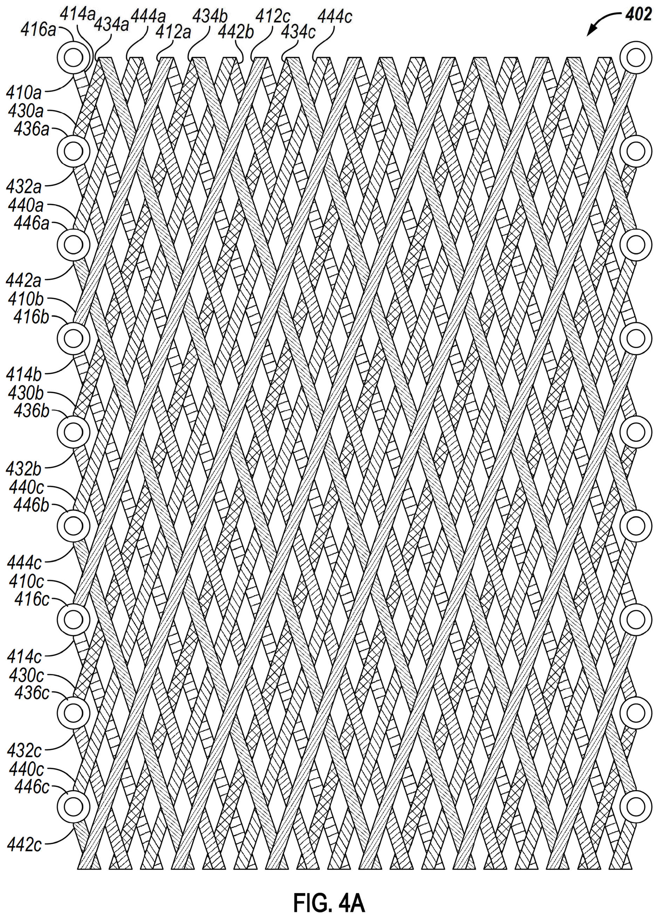

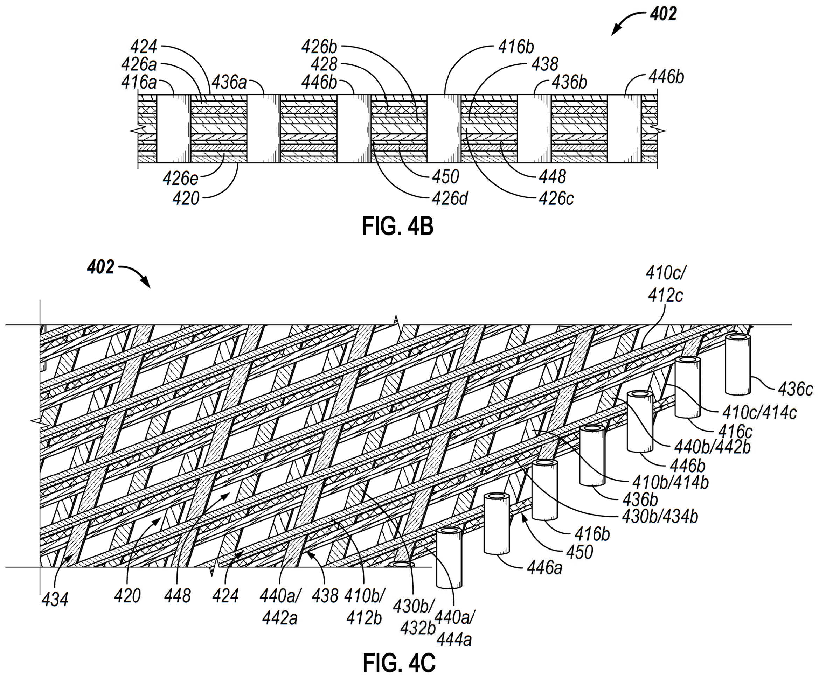

FIGS. 4A-4C illustrates an example six layer trace bundle 402 in accordance with an embodiment of the present disclosure. Trace bundle 402 may be included as part of a six layer PCB coil. FIG. 4A is a top down view of a portion the trace bundle 402, FIG. 4B is a side view of a portion the trace bundle 402, and FIG. 4C is a perspective view of a portion of the trace bundle 402 with the insulating layers removed for illustrative purposes only to assist with ease of understanding and as relative orientation between parts.

In the example of trace bundle 402, trace bundle 402 comprises a first plurality of traces 410, a second plurality of traces 430, and a third plurality of traces 440 that are twisted or wound around one or more of insulating layers 426a-426e to form the trace bundle 402. Traces 410 may provide a first sub-bundle, traces 430 may provide a second sub-bundle, and traces 440 may provide a third sub-bundle. Each trace 410 is formed from trace segments 412a-412n (collectively referred to herein as trace segments 412) and trace segments 414a-414n (collectively referred to herein as trace segments 414) that are connected by interlayer connectors 416a-416n (collectively referred to herein as interlayer connectors 416). Each trace 430 is formed from trace segments 432a-432n (collectively referred to herein as trace segments 432) and trace segments 434a-434n (collectively referred to herein as trace segments 434) that are connected by interlayer connectors 436a-436n (collectively referred to herein as interlayer connectors 436). Each trace 440 is formed from trace segments 442a-442n (collectively referred to herein as trace segments 442) and trace segments 444a-444n (collectively referred to herein as trace segments 444) that are connected by interlayer connectors 446a-446n (collectively referred to herein as interlayer connectors 446).

As shown in FIG. 4B, trace segments 412 can be formed in a conductor layer 424 on an upper side of insulating layer 426a and trace segments 414 can be formed in a conductor layer 420 on a bottom side of insulating layer 426e. Further, trace segments 432 can be formed in a conductor layer 428 between a bottom side of insulating layer 426a and an upper side of insulating layer 426b and trace segments 434 can be formed in a conductor layer 438 between a bottom side of insulating layer 426b and an upper side of insulating layer 426c. Additionally, trace segments 442 can be formed in a conductor layer 448 between a bottom side of insulating layer 426c and an upper side of insulating layer 426d and trace segments 444 can be formed in a conductor layer 450 between a bottom side of insulating layer 426d and an upper side of insulating layer 426e. Interlayer connectors 416 interconnect one of trace segments 412 to one of trace segments 414, while interlayer connectors 436 interconnect one of trace segments 432 to one of trace segments 434 and interlayer connectors 446 interconnect one of trace segments 442 to one of trace segments 444.

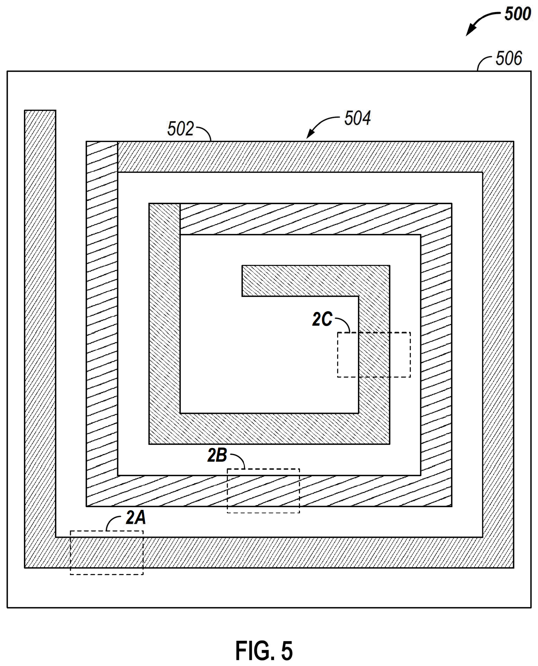

FIG. 5 is a schematic block diagram of an example PCB coil 500 having varying coil density along the length of the PCB coil 500 in accordance with embodiments of the present disclosure.

The PCB coil 500 includes a trace bundle 502 wound through a plurality of turns or loops to form a coil 504 on a substrate 506. The trace bundle 502, coil 504, and substrate 506 may be substantially similar to trace bundle 102, coil 104, and substrate 106 as described in connection with FIGS. 1A-1C. Thus, trace bundle 502 comprises a plurality of individual traces (e.g., traces 110) that are twisted or wound around portions of substrate 506, considered insulating layers (not shown in FIG. 5 for easy of understanding) to form the trace bundle 502. Each trace is formed from trace segments (e.g., trace segments 112 and 114) that are connected by interlayer connectors (e.g., interlayer connectors 116).

FIG. 5 illustrates a plurality of locations 508a-508c along the coil 504 and a zoomed in view of a portion of trace bundle 502 at each location 508a-508c. In this example, location 508c is closer to a center of the trace bundle 502 than location 508b and location 508a, while location 508a is the farthest from the center (e.g., an outer end of the coil). As can be seen from FIG. 5, the trace density of trace bundle 502 at each location 508a-508c differs relative to the other locations 508a-508c. For example, the trace density of trace bundle 502 at location 508a is illustratively shown as trace bundle 202a having the trace density described in connection with FIG. 2A, the trace density of trace bundle 502 at location 508b is illustratively shown as trace bundle 202b having trace density described in connection with FIG. 2B, the trace density of trace bundle 502 at location 508b is illustratively shown as trace bundle 202c having the trace density described in connection with FIG. 2C. That is, for example, the spacing between adjacent interlayer connectors is reduced as one progresses from location 508a to location 508c, thus increasing trace density at each location.

As described above, by varying the trace density, current propagating in the coil can be controlled which can address thermal considerations. For example, at inner turns of a PCB coil 504 (e.g., locations 508c), thermal considerations can dominate as the inner turns become hotter than outer turns (e.g., location 508a) due to non-uniform current distribution. A higher density of traces can be provided at these inner locations to permit larger currents through those locations of the PCB coil 504, which lowers temperature and improves overall performance. A lower density of trace segments can be utilized where thermal considerations are less prominent (e.g., location 508a), which allows for less conductive material to be used in manufacturing thus lower manufacturing costs. Thus, PCB coil 500 can be provided to address varying current and thermal demands across the PCB coil by varying the density of traces across the length of the PCB coil 500.

In some embodiments, the change in trace density need not be at a corner or turn of the coil 504, and may instead be at any point along a vertical and/or horizontal length of the coil. That is, for example, a change in trace density may occur at any location along the length of the coil 504 according to a desired implementation.

While three different locations and trace densities are shown in this example, the embodiments disclosed herein are not intended to be limited to three. Any number of changes in trace density may be provided along the length of coil 504.

Additionally, while the example shown in FIG. 5 leverages spacing between interlayer connectors 516 to adjust the trace density, embodiments disclosed herein are not so limited. For example, trace density may be adjusted through adding or remove sub-bundles to the trace bundle 502. As an illustrative example, a two layer trace bundle (e.g., trace bundle 102) may be used at location 508a, a four layer trace bundle (e.g., trace bundle 302) at location 508b, and a six layer trace bundle (e.g., trace bundle 402) at location 508c. In this case, at each transition, a single trace from a lower numbered layer trace bundle may be connected to one or more traces of a larger numbered layer trace bundle (e.g., transitioning from trace bundle 102 to trace bundle 302 may require a single trace 110 to connect to two traces 310 or to two sub-bundles, such as a trace 310 and a trace 330).

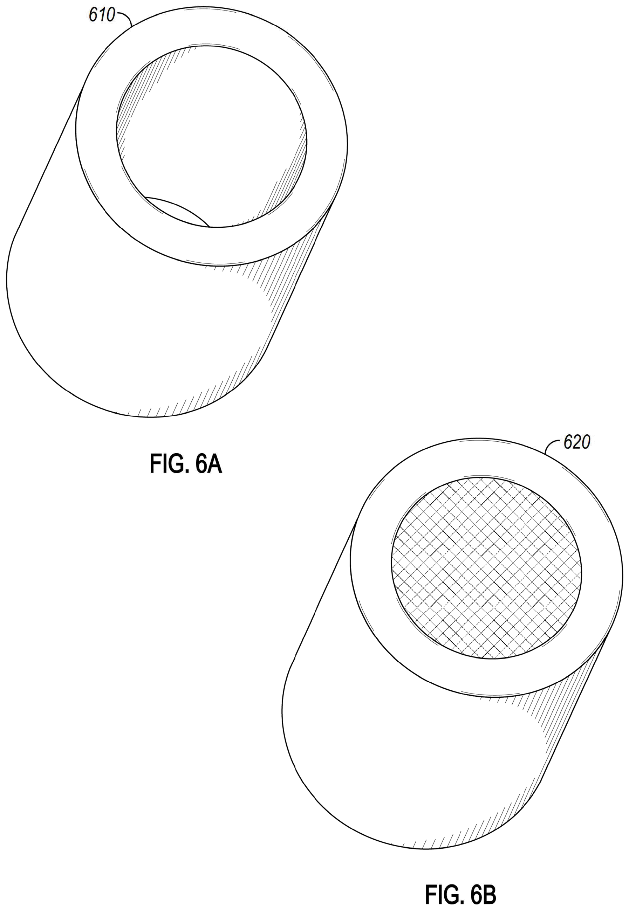

FIGS. 6A and 6B illustrate examples of interlayer connectors in accordance with embodiments of the present disclosure. FIG. 6A and 6B show interlayer connectors 610 and 620, respectively, which can be implemented as any interlayer connectors disclosed herein. FIG. 6A depicts interlayer connectors 610 as a hollow through via and FIG. 6B depicts interlayer connectors 620 as a filled through via.

To increase reliability and conductivity of the embodiments disclosed herein, filled through vias of FIG. 6B can be used. The PCB coils disclosed herein generally operate under high power conditions which can lead to temperature changes. Thin copper-plated through vias could be fragile under thermal cycling because of thermal expansion. Thus, in high power applications, filling the through via can be utilized to enhance the strength and also reduce overall resistance in a connected trace for lower power loss. The filled through via of FIG. 6B can be implemented by electroless plating when the through via size is small. As another example, the filling can be done through a conductive paster curing process. After the through vias are filled, a conductive paste, such as, but not limited to, copper paste or silver paste can be applied followed by a high temperature curing for solidification.

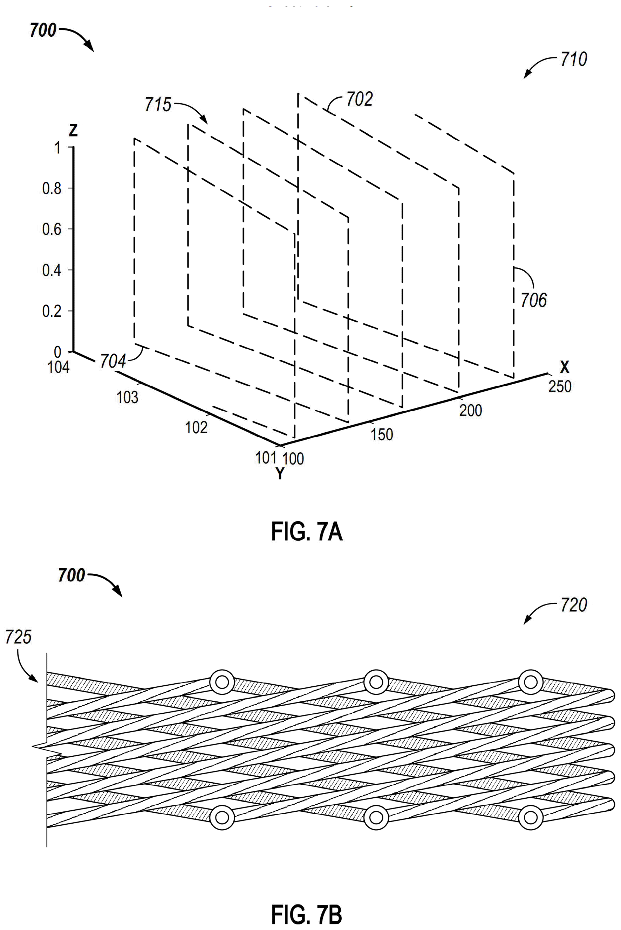

FIGS. 7A through 7D-2 depict a flow of an example method 700 for manufacturing a PCB coil in accordance with embodiments of the present disclosure. The method 700 provides for generating repeatable trace routes, such as trace route 122 describe above, from which traces and trace bundles can be fabricated that are both reproducible and scalable with minimal redesign.

At operation 710, a route design 715 is generated for a signal trace of a trace bundle. This route design 715 may represent a unit cell. In some embodiments, route design 715 can be generated using a trace design tool, such as MATLAB^{®} or other trace design system. For example, design parameters can be entered into the trace design system that executes code to generate the route design 715 according the design parameters. The design parameters may include, for example by not limited to, a desired orientation, starting point, thickness of coil, width of coil, and length of coil. Consideration of system trade-offs may be made determine the optimum routing pattern and design, such as number and size of individual traces, numbers of layers of the PCB, connection complexities, board space, and the like. From these inputs, the trace design system can automatically generate the route design 715 . Thus, the route design can be repeatable and scalable as desired.

Route design 715 is an example of design from which a single trace (e.g., trace 110) can be fabricated. For example, route design 715 comprises segment designs 702 and 704 which are generated at a distance apart from each other. The segment designs 702 and 704 may correspond to a design for each trace segment of the trace. For example, segment deigns 702 may correspond to trace segments 112 of FIGS. 1A-1C and segment deigns 704 may correspond to trace segments 114. The distance between segment deigns 702 and 704 may correspond to the thickness of an insulating layer (e.g., insulating layer 126) on which the trace segments are to be formed. Route design 715 also includes vertical lines or connector designs 706 which can correspond to locations of the interlayer connectors (e.g., interlayer connectors 116).

While route design 715 is shown having certain dimensions, these dimensions are provided as examples for illustrative purposes. As noted above, design parameters may be entered according to a desired implementation which the trace design system uses to generate the optimal route design 715.

Once generated, route design 715 can be used to generate a bundle design 725 at operation 720. For example, the trace design system can take design parameters of the unit cell route design 715 and repeat the route design 715 at different starting points so to generate a bundle design 725. Example design parameters for operation 720 include, but are not limited to, a minimum trace width and a minimum gap distance between each trace adjacent trace. The minimum trace width defines the width of each trace segment and interlayer connectors that forms the trace, with the route design 715 at a mid-point of the minimum trace width. In this example, bundle design 725 is shown as an example corresponding to the trace bundle 102 of FIG. 1A, in which multiple route design 715 are generated with spacing therebetween to provide for a number of traces (e.g., traces 110). Examples of some trace widths and spacings are provided in Table 1 below.

From the trace bundle design 725 at operation 720, a coil design 735 is generated at operation 730. That is, the bundle design 715 can be extended according to desired dimensions of a PCB coil to be manufactured and through a desired number of turns (also referred to as coil numbers) to provide a coil design 735. In an example implementation, the PCB coil may have dimensions of 150 mm x 150 mm, 350 mm x 350 mm, and the like.

From the coil design 735, a physical PCB coil 745 can be fabricated at operation 740. The PCB coil 745 can be fabricated using any PCB manufacturing techniques as known in the art.

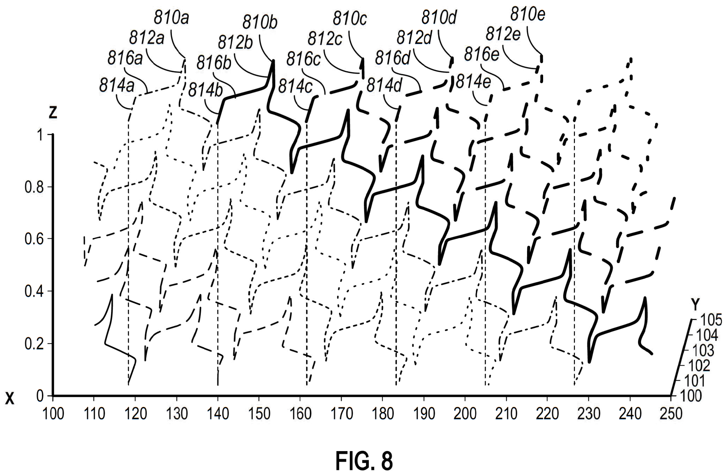

FIG. 8 is an example of a multi-route design 815 for multi-layer embodiment. Multi-route design 815 includes a plurality of individual route designs 810a-e generated, for example, at operation 710 of FIG. 7A. Each route design 810a-810e comprises segment designs 812a-e and 814a-e and connector designs 816a-e, respectively. In this example, each route design 810a-810e includes segment designs that are connected by connector designs through a single vertical space (e.g., corresponding to insulating layers). That is, for example, route design 810a includes segment design 812a is connected to segment design 814a by connector design 816a that steps through each insulating layer space in a sequential order, and thus the trace fabricated from route design 810a would be formed on each insulating layer of the resulting trace bundle.

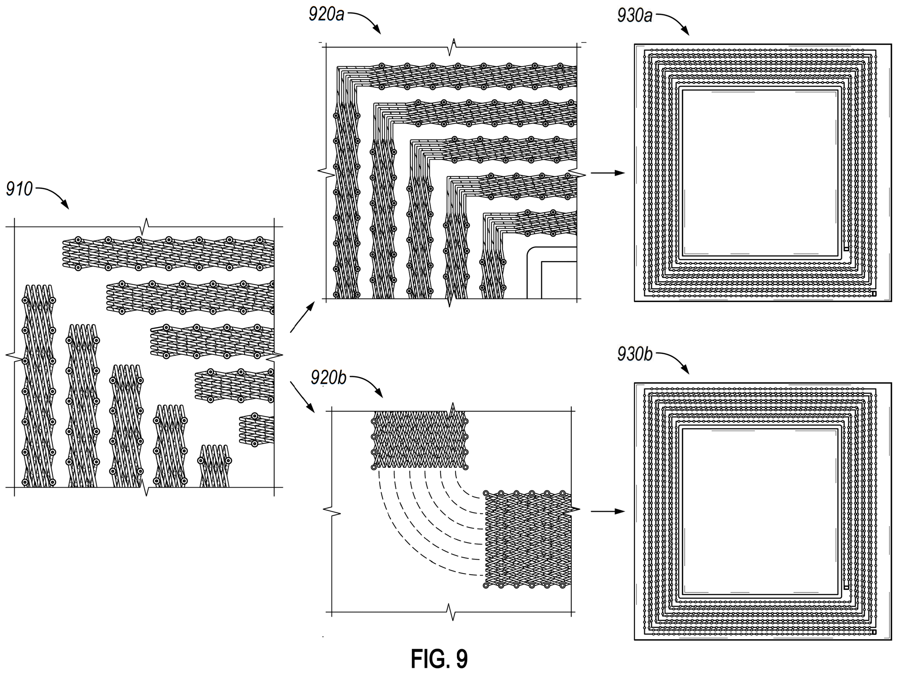

FIG. 9 illustrates example of corner connections in fabricating a PCB coil in accordance with embodiments of the present disclosure. Unconnected portions of a coil design 910 may be generated at operation 720. During operation 730, trace segments from one trace bundle 912 can be connected to another trace bundle 914 using, for example, a corner approach (e.g., right angle) as shown in design 920a, a rounded approach as shown in design 920b, or other desired connection methods. In either case, operation 730 results in a coil design, such as design 930a or 930b in a couple examples.

Table 1 below provides example of different PCB coils constructed according to the embodiments disclosed herein and experimental results on power transfer efficiency achieved by tuning design parameters between different designs. Table 1 below shows test results of inductance (L), AC resistance (Rac), DC resistance (Rdc), and quality (Q) factors for PCB coils of different boards organized by board number having different numbers of turns (e.g., coil numbers), conductor layers, thickness of conductive material of each layer (e.g., copper thickness in ounces), number of traces across a trace bundle (e.g., number of traces per a layer), total number traces in a trace bundle, trace width, and trace spacing. AC and DC resistance may reflect loss and the Q-factor can reflect the efficiency of power transfer.

**Table 1**

| **Design parameters** | | | | | | | | | | | **Measured values** |
|---|---|---|---|---|---|---|---|---|---|---|---|
| **Board number** | **Coil #** | **Layers** | **Copper thickness (oz)** | **Traces across** | **# of traces** | **Trace width** | **Min trace spacing /width** | **L (uH)** | **Rac (mΩ)** | **Rdc (mΩ)** | **Q measured** |
| 1 | 1 | 4 | 2 | 15 | 59 | 0.2467 | 0.2 | 6.23 | 53.31 | 48.23 | 62.81 |
| 1 | 2 | 4 | 2 | 4 | 15 | 1.2947 | 0.2 | 6.32 | 85.18 | 37.02 | 39.63 |
| 1 | 3 | 4 | 2 | 7 | 27 | 0.7118 | 0.2 | 6.22 | 54.58 | 36.68 | 60.94 |
| 1 | 4 | 4 | 2 | 11 | 43 | 0.3997 | 0.2 | 6.17 | 43.56 | 33.94 | 75.61 |
| 2 | 5 | 4 | 4 | 10 | 39 | 0.3463 | 0.32 | 6.18 | 29.94 | 20.02 | 110.26 |
| 2 | 6 | 4 | 4 | 4 | 15 | 1.1989 | 0.32 | 6.45 | 78.09 | 5.65 | 44.16 |
| 2 | 7 | 4 | 4 | 6 | 23 | 0.745 | 0.32 | 6.08 | 50.25 | 23.74 | 64.66 |
| 2 | 8 | 4 | 4 | 8 | 31 | 0.4998 | 0.32 | 6.32 | 44.18 | 31.1 | 76.35 |
| 3 | 9 | 4 | 6 | 2 | 7 | 2.2377 | 0.45 | 5.84 | 82.88 | 5.34 | 37.6 |
| 3 | 10 | 4 | 6 | 4 | 15 | 1.0951 | 0.45 | 6.12 | 72.68 | 11.97 | 45.02 |
| 3 | 11 | 4 | 6 | 5 | 19 | 0.8237 | 0.45 | 5.89 | 45.34 | 5.87 | 69.43 |
| 3 | 12 | 4 | 6 | 7 | 27 | 0.4923 | 0.45 | 6.19 | 37.43 | 17.74 | 88.35 |
| 4 | 13 | 6 | 6 | 2 | 11 | 2.1308 | 0.45 | 5.98 | 96.98 | 3.59 | 32.94 |
| 4 | 14 | 6 | 6 | 4 | 23 | 1.0402 | 0.45 | 6.03 | 77.09 | 2.01 | 41.79 |
| 4 | 15 | 6 | 6 | 5 | 29 | 0.7792 | 0.45 | 6.05 | 52.48 | 2.46 | 61.67 |
| 4 | 16 | 6 | 6 | 7 | 41 | 0.4598 | 0.45 | 6.09 | 28.84 | 8.95 | 112.77 |
| 5 | 17 | 8 | 6 | 2 | 15 | 2.0551 | 0.45 | 5.72 | 106.77 | 5.06 | 28.62 |
| 5 | 18 | 8 | 6 | 4 | 31 | 0.99 | 0.45 | 5.81 | 81.88 | 4.59 | 37.88 |
| 5 | 19 | 8 | 6 | 5 | 39 | 0.736 | 0.45 | 5.94 | 60.06 | 5.99 | 52.85 |
| 5 | 20 | 8 | 6 | 6 | 47 | 0.5578 | 0.45 | 5.92 | 47.22 | 6.75 | 66.99 |

As can be seen from Table 1, AC resistance may be related to number of traces, width, and traces across. The thinner traces may lead to lower AC resistance because the thin trace acts similarly to Litz wire. The DC resistance may be affected by number of layers and thickness of copper. The lowest DC resistance occurred in PCB coils having 6 layers and 6-oz of copper.

Increases in amounts of copper may not necessarily be a key contributor to high Q-factors. For example, the highest Q-factor occurred in boards No. 4 and No.2, but not in No.5 which has more layers and more copper. A high-performance PCB coil should have a good balance of different structure paraments such as trace width, thickness, number of layers, etc. Generally, in order to achieve high Q, the loss may need to be minimized.

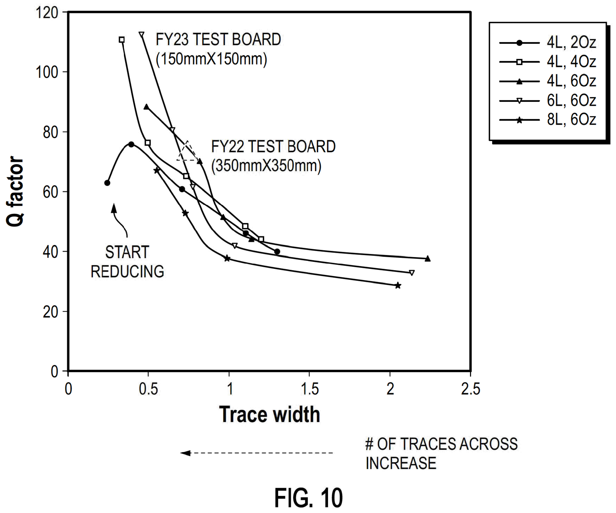

FIG. 10 shows changing trend of Q-factor for the PCB coils of Table 1. As can be seen in FIG. 10, as number of relatively traces increases, the Q-factor increases as well, but there may not be sufficient copper due to minimum gap widths between traces. Optimal design for high Q-factor performance could be achieved by selecting a balancing point between these competing parameters.

Based on the Table 1 and FIG. 10, an example candidate for an optimal PCB board for high power transfer applications (e.g., FIG. 11 below) may be a design having 6-layers with larger number of traces. Moving from 150mmx150mm size PCB coil to 350mmx350mm may increase the Q-factor result.

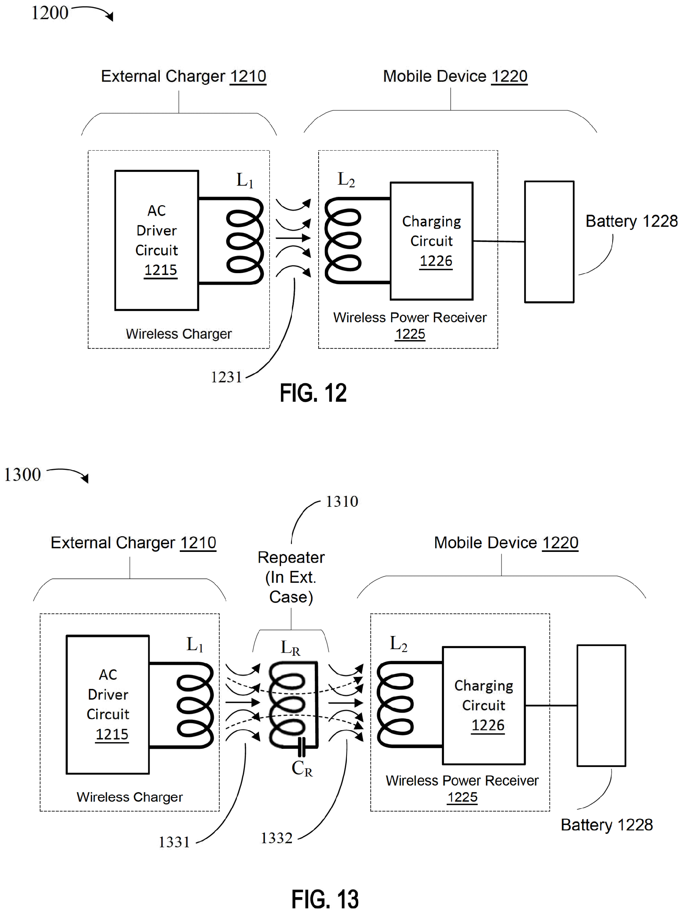

As described in greater detail below and in conjunction with FIGs. 12-26, in various embodiments the above-described PCB coils / trace bundles can be incorporated in modules for wireless charging, such as mobile device cases, coil repeater assemblies, or other types of wireless charging modules.

FIG. 12 provides a block diagram illustrating a conventional wireless charging configuration 1200 for a mobile device. The wireless charging configuration includes an external charger 1210 and a mobile device 1220, which operate together using inductive wireless charging to charge the mobile device. As one example, the mobile device 1220 can be a mobile telephone (e.g., a smartphone). The external charger 1210 is a wireless charger - e.g., a wireless charging pad (such as, e.g., a pad that lays on a flat surface or magnetically attaches to a mobile device) - that includes an alternating current (AC) driver circuit 1215 that is electrically coupled to a first inductive coil (inductor) L1. The external charger is typically of a relatively lower power (e.g., 10-30W). The mobile device 1220 includes a wireless power receiver 1225 and a battery 1228. The wireless power receiver 1225 includes a second inductive coil (inductor) L2 that is electrically coupled to a charging circuit 1226 (which can include, e.g., a rectifier and/or other electronic components). The second inductive coil L2 is a wireless charging coil in the mobile device 1220 that is used for wireless charging of the mobile device.

The AC driver circuit 1215 is configured to provide AC power to the first coil L1 sufficient to generate a magnetic field 1231 (e.g., an electromagnetic field) which, in turn, passes (e.g., permeates or radiates) into the second coil L2 (i.e., the wireless charging coil in the mobile device 1220) when the second coil L2 is in sufficiently close proximity to the first coil L1. The AC driver circuit is further configured such that, in conjunction with the first coil L1, the provided AC power is of a selected frequency fC - which can be designed to match (at least approximately) a resonant frequency of the wireless power receiver 1225.

When the first coil L1 and the second coil L2 are in sufficiently close proximity and when power is applied by the AC driver circuit 1215, the magnetic field 1231 from L1 passes (e.g., permeates or radiates) into the second coil L2 (i.e., the wireless charging coil in the mobile device 1220). The second coil L2 (in conjunction with the charging circuit 1225) then transfers power from the magnetic field 1231 into electric power, via inductive coupling, to be supplied to charge the battery 1228. In this way, the wireless power receiver 1225 generates (e.g., provides) electric power to charge the battery 1228 when the second coil L2 is exposed to a changing magnetic field 1231 from L1.

Existing wireless charging technologies used in connection with mobile devices - such as the conventional wireless charging configuration 1200 as described with reference to FIG. 12 - encounter significant power transfer inefficiency and limitations when mobile devices are covered with thick (or dense) protective cases. For example, the longer transmission path caused by a thick case leads to an extremely slow charging speed or complete failure of the charging process. Such difficulties are alleviated by the improved wireless charging technology described below.

FIG. 13 provides a diagram illustrating an example of an improved wireless charging configuration 1300 for a mobile device according to one or more embodiments, with reference to components and features described herein including but not limited to the figures and associated description. As shown in FIG. 13, the improved wireless charging configuration 1300 includes the external charger 1210 (FIG. 12, already discussed) and the mobile device 1220 (FIG. 12, already discussed). The improved wireless charging configuration 1300 as shown in FIG. 13 also includes a wireless charging repeater circuit 1310, which is included as part of an external case (e.g., a protective case for the mobile device) (not shown in FIG. 13). The external case with the wireless charger repeater circuit 1310 is typically attached to the mobile device 1220 and, thus, the wireless charger repeater circuit 1310 is situated between the external charger 1210 and the wireless power receiver 1225 of the mobile device 1220. The external charger 1210 is external to both the mobile device 1220 and the external case that has the wireless charging repeater circuit 1310.

The wireless charging repeater circuit 1310 includes a third inductive coil (inductor) LR and a tuning capacitor CR that is electrically coupled to each end of the coil LR. The capacitor CR includes one or more physical capacitors, which are selected based on the particular requirements for the wireless charging repeater circuit 1310 such as, e.g., capacitance value, size/space considerations, etc. The third inductive coil LR and the capacitor CR form a resonant circuit, and the components are selected such that the resonant frequency of the wireless charging repeater circuit 1310 matches (at least approximately) the resonant frequency fC of the external charger 1210 and/or the resonant frequency of the wireless power receiver 1225. In some embodiments the wireless charging repeater circuit 1310 includes additional electronic components (not shown in FIG. 13). Notably, however, in all embodiments the wireless charging repeater circuit 1310 excludes electrical connection to any active component (including components such as, e.g., a battery, solar cell or other power source) that supplies power.

The external case is designed to be attached to the mobile device such that it covers at least a portion of the mobile device 1220. For example, in embodiments the external case is a protective case that snaps on the back of the mobile device 1220 and covers all or a portion of the back and edges of the mobile device 1220. The inductive coil LR of the wireless charging repeater circuit 1310 is arranged such that, when the external case is attached to the mobile device 1220, the inductive coil LR is located proximate to the coil L2 (i.e., the wireless charging coil in the mobile device 1220) of the wireless power receiver 1225 in the mobile device 1220. For example, in embodiments when the external case is attached to the mobile device 1220, the inductive coil LR is located parallel to and within a short distance from the coil L2 in the wireless power receiver 1225 such that the center of the inductive coil LR is aligned (at least approximately) with the center of the coil L2.

In operation, the external case is attached to the mobile device 1220 (e.g., snapped on the back of the mobile device 1220). When the external charger 1210 is placed in sufficiently close proximity to the external case (as attached to the mobile device 1220), and power is applied by the AC driver circuit 1215, a first magnetic field 1331 (e.g., an electromagnetic field) from the coil L1 passes (e.g., permeates or radiates) into the inductive coil LR of the wireless charging repeater circuit 1310. The wireless charging repeater circuit 1310 then generates a second magnetic field 1332 (e.g., an electromagnetic field) via the inductive coil LR of the wireless charging repeater circuit 1310 from the first magnetic field 1331, via inductive coupling between the coil L1 and the inductive coil LR. The second magnetic field 232 passes (e.g., permeates or radiates) into the coil L2. The coil L2 then transfers power from the second magnetic field into electric power, via inductive coupling between the coil L2 and the coil LR, to be supplied to charge the battery 1228 in the mobile device 1220.

In some circumstances, some of the magnetic field 1331 from the coil L1 can pass through the coil LR and into the coil L2 (illustrated as dotted lines between the coil L1 and the coil L2). The amount of the magnetic field 1331 that can reach the coil L2 can depend on several factors, including the strength of the magnetic field 1331, the thickness of the external case, among other factors. Further, the presence of the wireless charging repeater circuit 1310 improves the focus of the flux to help correct any misalignment between the external charger 1210 and the mobile device 1220. As a result, in operation the coil LR boosts flux linkage between the coil L1 and the coil L2 to enhance coupling and transfer of power between the external charger 1210 and the mobile device 1220.

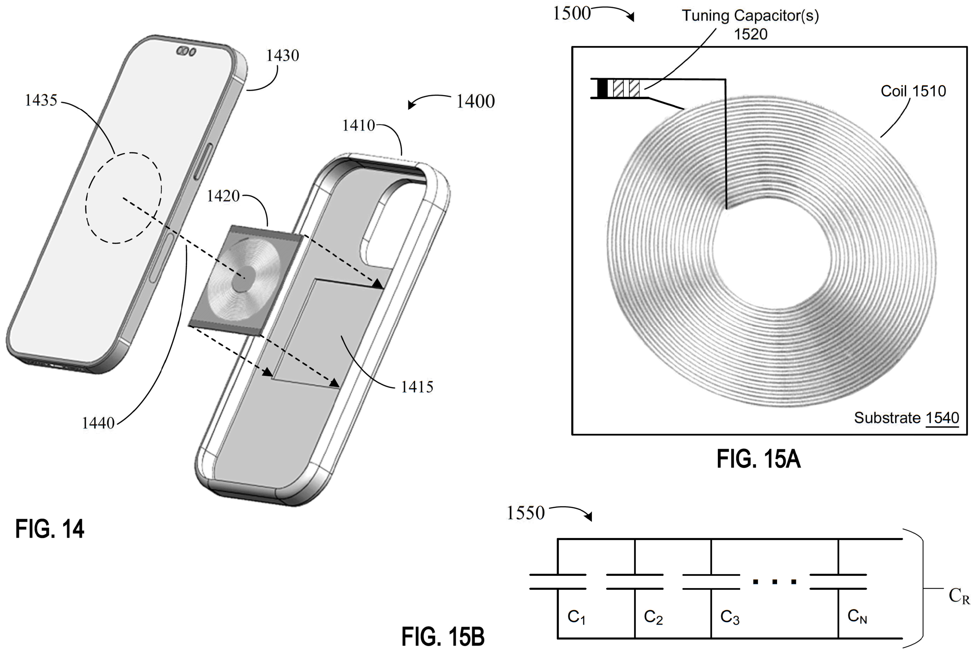

FIG. 14 provides a diagram illustrating an example of a mobile device case 1400 with a coil repeater assembly for wireless charging according to one or more embodiments, with reference to components and features described herein including but not limited to the figures and associated description. As shown in FIG. 14, the mobile device case 1400 includes a case body 1410 and a coil repeater assembly 1420 that is positioned on or within an interior surface of the case body 1410. The mobile device case 1400 is configured to be attached to the mobile device 1430. For example, in some embodiments the mobile device case 1400 is designed such that the mobile device case 1400 snaps onto the back of the mobile device 1430. The mobile device 1430 corresponds to the mobile device 1220 (FIGs. 12 and 13, already discussed) and, thus, includes a wireless charging coil L2, where the location of the coil L2 in the mobile device 1430 is indicated by the dotted circle 1435.

The coil repeater assembly 1420 includes a wireless charging repeater circuit and a substrate. The wireless charging repeater circuit of the coil repeater assembly 1420 corresponds to the wireless charging repeater circuit 1310 (FIG. 13, already discussed) and, thus, includes an inductive coil LR that is electrically coupled to a capacitor CR. Notably, however, in all embodiments the wireless charging repeater circuit of the coil repeater assembly 1420 excludes electrical connection to any active component (including components such as, e.g., a battery, solar cell or other power source) that supplies power. The substrate provides a supporting structure to hold or position the wireless charging repeater circuit. Further details regarding the coil repeater assembly 1420 are provided herein with reference to FIGs. 15A-15B, 16 and 17.

The coil repeater assembly 1420 is attached on or within an interior surface of the case body 1410 (e.g., via an adhesive or other techniques for attachment). In some embodiments, the case body 1410 includes a recessed region 1415 to hold the coil repeater assembly 1420 in position. In some embodiments, the recessed region 1415 is of a depth that matches (at least approximately) the thickness of the coil repeater assembly 1420 to permit the coil repeater assembly 1420 of the mobile device case 1400 to fit as closely as possible to the mobile device 1430 - e.g., such that in some embodiments the inductive coil LR is positioned against the back of the mobile device 1430 (or in some other embodiments there may be a very thin gap between the coil LR and the back of the mobile device 1430) when the mobile device case 1400 is attached to the mobile device 1430.

The case body 1410 is designed to be attached to the mobile device 1430 - for example, by snapping onto the back of the mobile device 1430. Thus, the particular configuration and dimensions of the case body 1410 will depend on the configuration and dimensions of the mobile device 1430 - which in turn can depend on the manufacturer and/or model of the mobile device 1430. In embodiments, the case body 1410 also includes cutouts or spaces to permit use of various features of the mobile device 1430 while the mobile device case 1400 is attached thereto. As one example, if the mobile device 1430 is a smartphone with a camera, the case body 1410 can include an opening to allow external light to enter a camera sensor in the mobile device 1430, thus enabling use of the camera while the mobile device case 1400 is attached.

The coil repeater assembly 1420 is arranged on or within the interior surface of the case body 1410 such that, when the mobile device case 1400 is attached to the mobile device 1430, the inductive coil LR of the wireless charging repeater circuit is located proximate to a wireless charging coil (e.g., the coil L2) in the mobile device 1430. For example, in embodiments, when the mobile device case 1400 is attached to the mobile device 1430, the coil LR is located parallel to and within a short distance from the wireless charging coil (where the location of the wireless charging coil in the mobile device 1430 is indicated by the dotted circle 1435). As one example, in some embodiments the coil LR is positioned against the back of the mobile device 1430 when the mobile device case 1400 is attached to the back of mobile device 1430, and in some other embodiments there may be a very thin gap between the coil LR and the back of the mobile device 1430. Further, the center of the coil LR is aligned (at least approximately) with the center of the wireless charging coil (indicated in FIG. 14 by the dotted line 1440). The location of the wireless charging coil can depend on the manufacturer and model of the mobile device 1430 and, thus, the case body 1410 and the location of the coil repeater assembly 1420 (and of any recessed region 1415 to hold the coil repeater assembly 1420) on or within the interior surface of the case body 1410 can likewise be positioned based on the manufacturer and model of the mobile device 1430 for which the case body 1410 is intended to fit.

In operation, with the mobile device case 1400 attached to the mobile device 1430, the mobile device case 1400 is placed in proximity to an external wireless charger (such as, e.g., the external charger 1210 in FIGs. 12-13, already discussed), such that the external wireless charger, the coil repeater assembly 1420 having a wireless charging repeater circuit (part of the mobile device case 1400) and the mobile device 1430 form a wireless charging configuration (e.g., such as, e.g., the wireless charging configuration 1300 in FIG. 13, already discussed). As such, the wireless charging configuration operates as described with reference to the wireless charging configuration 1300 in FIG. 13. In particular, when exposed to a changing magnetic field from the external wireless charger, the wireless charging repeater circuit of the coil repeater assembly 1420 operates to generate a magnetic field that passes (e.g., permeates or radiates) into the wireless charging coil (e.g., the coil L2) in the mobile device.

FIG. 15A provides a diagram illustrating an example of a coil repeater assembly 1500 for use in wireless charging according to one or more embodiments, with reference to components and features described herein including but not limited to the figures and associated description. The coil repeater assembly 1500 is to be placed on or within a surface of a mobile device case body (such as, e.g., the case body 1410 of the mobile device case 1400 in FIG. 14, already discussed). In embodiments the coil repeater assembly 1500 corresponds to the coil repeater assembly 1420 (FIG. 14, already discussed). As shown in FIG. 15, the coil repeater assembly 1500 includes an inductive coil 1510, one or more tuning capacitor(s) 1520, and a substrate 1540. The tuning capacitor(s) 1520 are electrically coupled to each end of the coil 1510, and the inductive coil 1510 and the one or more tuning capacitor(s) 1520 form a wireless charging repeater circuit that corresponds to the wireless charging repeater circuit 1310 (FIG. 13, already discussed). As such, the inductive coil 1510 corresponds to the inductive coil LR (FIG. 13, already discussed), and the tuning capacitor(s) 1520 correspond to the capacitor CR (FIG. 13, already discussed). Notably, however, in all embodiments the wireless charging repeater circuit excludes electrical connection to any active component (including components such as, e.g., a battery, solar cell or other power source) that supplies power. The components LR and CR of the wireless charging repeater circuit are selected such that the resonant frequency of the wireless charging repeater circuit matches (at least approximately) the resonant frequency fC of the external charger and/or the resonant frequency of the wireless power receiver of the mobile device.

The substrate 1540 provides a supporting structure to hold or position the wireless charging repeater circuit (or components thereof), such as the inductive coil 1510 and/or the tuning capacitors 1520. In some embodiments the substrate 1540 is any material suitable for a printed circuit board (PCB), such as, e.g., a fiberglass/epoxy material (e.g., FR4). In some embodiments, the substrate 1540 is a ceramic or crystalline material e.g., as used in manufacturing thin film circuits. In some embodiments, the substrate is a flexible film or thin film including a material such as used in thin film circuitry or flexible circuitry. Use of a flexible film or thin film as a substrate enables use in a case body that is flexible or pliable. As an example, in some embodiments, the substrate is of a thickness of approximately 1 mm or less for a PCB, or 0.5 mm or less for a thin film or flexible circuit.

As alluded to above, in some embodiments the inductive coil 1510 may comprise one of the PCB coils / trace bundles described above in conjunction with FIGs. 1-11.

For example, in certain embodiments inductive coil 1510 may comprise: (1) a first conductor layer comprising first trace segments; (2) a second conductor layer comprising second trace segments; and (3) interlayer connectors electrically interconnecting segments of the first trace segments to segments of the second trace segments to form traces. Here, substrate 1540 may comprise an insulating layer disposed between the two conductor layers. As alluded to above, each trace of the formed traces may comprise a respective subset of the first trace segments electrically interconnected by a subset of the interlayer connectors to a corresponding subset of second trace segments such that the interconnected trace segments are woven through and around substrate 1540. Accordingly, the traces may form as a conductive line woven through and around substrate 1540 to form the inductive coil 1510 of the coil repeater assembly 1500. In some of these embodiments, density of the traces may vary across a length of the inductive coil 1510. For example, a first density of the traces at a first location on the inductive coil 1510 may be greater than a second density of the traces at a second location on the inductive coil 1510, wherein the first location is closer to a center of the inductive coil 1510 than the second location. As a related example, the density of the traces may be greater at higher current locations of the inductive coil 1510 than lower current locations of the inductive coil 1510. As described above, the density of the traces may be based on at least one of: (a) spacing between trace segments of a respective conductor layer; and (b) spacing between the interlayer connectors. As described above, a trace segment of a respective conductor layer may extend in a linear direction and parallel to other trace segments of the respective conductor layer. Relatedly, first trace segments of the first conductor layer may cross over the second trace segments of the second conductor layer (see e.g., FIGs. 1-11 above).

Related to the example embodiment for the inductive coil 1510 discussed in the previous paragraph, in certain embodiments the inductive coil 1510 may comprise turns of a trace bundle. As described above, the trace bundle may comprise traces formed from trace segments electrically interconnected by interlayer connectors. A respective trace may comprise electrically interconnected trace segments across multiple layers. Relatedly, density of the traces may vary across a length of the inductive coil 1510.

More generally, the inductive coil 1510 may comprise a metallic inductive coil winding made of a metal such as copper, copper alloy, etc. In embodiments the coil 1510 is a metallic trace (e.g., copper, copper alloy, etc.) that is disposed on a surface of the substrate 1540 through one of any of a number of techniques known in electronics manufacturing (e.g., techniques used in manufacturing PCBs and/or thin film or flexible circuits). In some embodiments, the coil 1510 is made of multiple thin copper traces arranged in a parallel or in a spiral or concentric configuration on the surface of the substrate. Each of these traces is narrow and thin, collectively acting like strands of a litz wire. They are isolated from each other with dielectric material inherent to the substrate. In some embodiments (e.g., limited planar size), a single flat copper winding path is used instead copper strands. It will be understood that, while the coil 1510 illustrated in FIG. 15A is a circular winding (or an approximation thereto), the coil 1510 can in embodiments be a winding of another shape such as, e.g., a square, a rectangle, etc. (or an approximation thereto).

The one or more tuning capacitor(s) 1520 are one or more small capacitors such as, e.g., used in manufacturing PCBs and/or thin film or flexible circuits. In some embodiments the one or more tuning capacitor(s) 1520 are thin film capacitors. The one or more capacitors 1520 are selected based on the particular requirements for the wireless charging repeater circuit of the coil repeater assembly 1500 such as, e.g., capacitance value, size/space considerations, etc. In some embodiments, the tuning capacitor(s) 1520 are placed on the substrate 1540 and electrically coupled to the coil 1510 via, e.g., metallic traces. In some other embodiments, the tuning capacitor(s) 1520 are placed elsewhere on or within the case body and electrically coupled to the coil 1510 via, e.g., wires.

In some embodiments, the wireless charging repeater circuit of the coil repeater assembly 1500 further includes a charge indicator element. In some embodiments, the charge indicator element includes an AC-powered LED light which connects to the circuit in the repeater board. When power transfer occurs via the wireless charging repeater circuit, the charge indicator is on. Once the battery is full and no wireless power is being transferred, the charge indicator is off. The charge indicator can be embedded into the protective case. Generally, the charge indicator should be exposed to the outside of the case rather than covered by the case, thus enabling a user to easily tell that the mobile device is being charged.

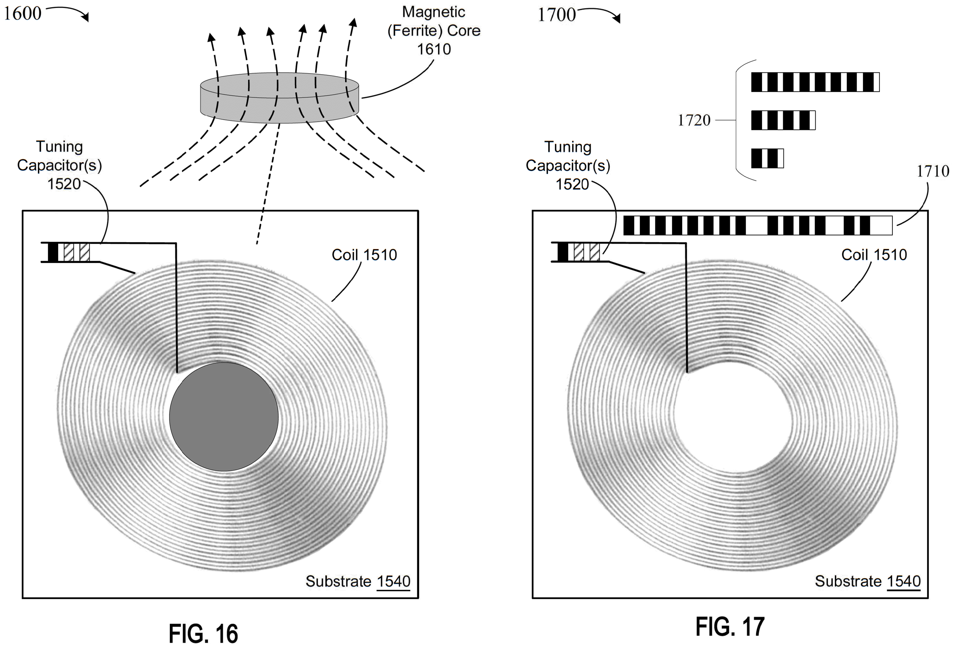

In some embodiments, the wireless charging repeater circuit of the coil repeater assembly 1500 further includes a tuning subcircuit as an auxiliary tuning stage to help provide that the wireless charging repeater circuit resonates at the same frequency as other components of wireless power transfer system (e.g., the external charger and the charging circuit of the mobile device). The tuning subcircuit includes one or more tuning capacitors that can be selected (e.g., inserted or changed) to adjust or fine-tune the resonant frequency of the wireless charging repeater circuit. Further details regarding the tuning capacitors for a tuning subcircuit are provided herein with reference to FIG. 15B and FIG. 17. In some embodiments, the tuning subcircuit further includes other components (not shown in FIG. 15B or FIG. 17) in various circuit configurations such as, e.g., resistors, extra inductors, switches (e.g., IGBTs) for even more complex applications, etc.

FIG. 15B provides a diagram illustrating an example circuit 1550 of tuning capacitors for use in a coil repeater assembly according to one or more embodiments, with reference to components and features described herein including but not limited to the figures and associated description. The circuit 1550 of tuning capacitors corresponds to the tuning capacitor CR (Fig. 13, already discussed) and/or to the tuning capacitor(s) 1520 (FIG. 14A, already discussed). As shown in FIG. 15B, the circuit 1550 includes one or more capacitors C1, C2, C3, ... CN that are electrically coupled or connected in parallel. The capacitors C1, C2, C3, ... CN are selected based on the particular requirements for the wireless charging repeater circuit of the coil repeater assembly 1500 such as, e.g., capacitance value, size/space considerations, etc. In some embodiments, the tuning capacitors C1, C2, C3, ... CN are coupled or connected in other circuit configurations (e.g., series, series-parallel, etc.). In embodiments the tuning capacitors can be selected (e.g., inserted or changed) as part of a tuning subcircuit to adjust or fine-tune the resonant frequency of the wireless charging repeater circuit.

FIG. 16 provides a diagram illustrating an example of a coil repeater assembly 1600 for use in wireless charging according to one or more embodiments, with reference to components and features described herein including but not limited to the figures and associated description. In embodiments the coil repeater assembly 1600 corresponds to the coil repeater assembly 1420 (FIG. 14, already discussed). The coil repeater assembly 1600 includes several components that are illustrated and discussed with reference to the coil repeater assembly 1500 in FIG. 15 (including the inductive coil 1510 and the tuning capacitors 1520 of the wireless charging repeater circuit), and discussion of such components will not be repeated except as necessary to describe the embodiments of FIG. 16. In addition to those components, the coil repeater assembly 1600 also includes a magnetic core 1610 such as, e.g., a ferrite core. The magnetic core 1610 is arranged in the interior of the coil LR of the wireless charging repeater circuit. In embodiments the coil LR is wound around the magnetic core 1610. The magnetic core 1610 can be inserted to increase the magnetic field in the center area (e.g., to focus the magnetic field or to prevent magnetic leakage to air).

FIG. 17 provides a diagram illustrating an example of a coil repeater assembly 1700 for use in wireless charging according to one or more embodiments, with reference to components and features described herein including but not limited to the figures and associated description. In embodiments the coil repeater assembly 1700 corresponds to the coil repeater assembly 1420 (FIG. 14, already discussed). The coil repeater assembly 1700 includes several components that are illustrated and discussed with reference to the coil repeater assembly 1500 in FIG. 15 (including the inductive coil 1510 and the tuning capacitors 1520 of the wireless charging repeater circuit), and discussion of such components will not be repeated except as necessary to describe the embodiments of FIG. 17. In addition to those components, the coil repeater assembly 1700 also includes a slot 1710 configurable to hold one or more tuning capacitors 1720 (e.g., to provide a capacitor circuit such as the circuit 1550 (e.g., a tuning subcircuit) in FIG. 15B, already discussed), which can include one or more supplementary capacitors. The slot 1710 includes one or more socket(s) to hold one or more of the tuning capacitors 1720, where the socket(s) are electrically coupled or connected to each end of the inductive coil 1510 to provide electrical coupling or connectivity of the capacitor(s) 1720 to each end of the coil 1510. If the slot 1710 includes more than one socket, in some embodiments the sockets are connected in parallel, in some embodiments the sockets are connected in series, and in some embodiments the sockets are connected in other configurations (e.g., series-parallel).

The modular configuration provided by the slot 1710 and the tuning capacitors 1720 provides flexibility in design of the wireless charging repeater circuit of the coil repeater assembly 1700. For example, to enable use of higher total capacitance for the tuning capacitor CR, the slot 1710 can hold additional individual capacitors that are electrically coupled in parallel to provide an increased capacitance value. Moreover, a selection of modular tuning capacitors 1720 (e.g., of different capacitance values) can be provided to enable tuning or customization of the wireless charging repeater circuit for different models of the mobile device (e.g., the mobile device 1430).

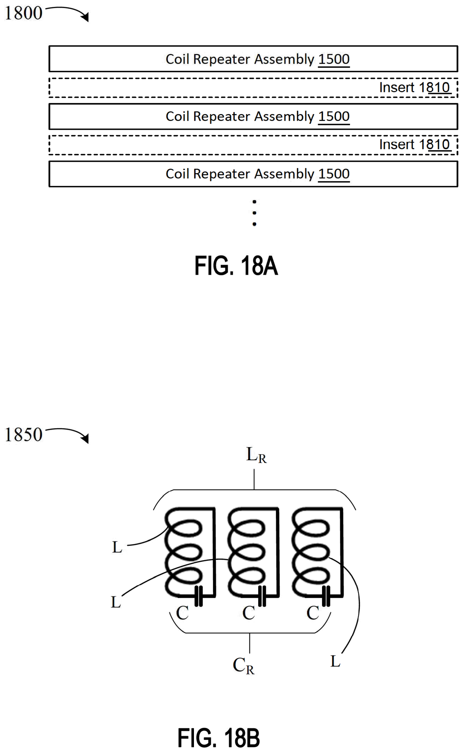

FIG. 18A provides a diagram illustrating an example of a stacked arrangement 1800 of coil repeater assemblies (side view) according to one or more embodiments, with reference to components and features described herein including but not limited to the figures and associated description. The stacked arrangement 1700 is used in embodiments as a wireless charging repeater circuit in the mobile device case 1400 for wireless charging. As shown in FIG. 18A, the stacked arrangement 1800 includes a plurality of layers, including a plurality of coil repeater assemblies 1500. In some embodiments, the stacked arrangement 1800 also includes one or more optional insert layers 1810. Each insert layer 1810 is arranged between and adjacent to two coil repeater assemblies 1500. For example, as illustrated in FIG. 18A the layers of the stacked arrangement 1800 are placed adjacent to each other (e.g., pressed together) in a stacked formation. The insert layer 1810 comprises an electrically-insulating layer, and can be used, e.g., to adjust the spacing between any two coil repeater assemblies 1500.

Although the example stacked arrangement 1800 as illustrated in FIG. 18A shows five layers - comprising three coil assemblies 1500, each separated by an insert layer 1810, it will be understood that or fewer or additional layers can be included in any particular embodiment of the stacked arrangement 1800. For example, the stacked arrangement 1800 can include two layers (two coil repeater assemblies 1500), three layers (two coil repeater assemblies 1500 separated by an insert layer 1810, or three coil repeater assemblies 1500 without an insert layer 1810), etc. Furthermore, while the example stacked arrangement 1800 as illustrated in FIG. 18A shows a plurality of coil repeater assemblies 1500, it will be understood that one or more coil repeater assemblies 1600 or one or more coil repeater assemblies 1700 can, in any particular embodiment, be substituted for one or more coil repeater assemblies 1500 in the stacked arrangement 1800.

FIG. 18B provides a diagram illustrating an example wireless charging repeater circuit 1850 for a stacked arrangement of coil repeater assemblies (e.g., the stacked arrangement 1800 in FIG. 18A) according to one or more embodiments, with reference to components and features described herein including but not limited to the figures and associated description. As shown in FIG. 18B, the wireless charging repeater circuit 1850 includes a series of coils L, each coil L corresponding to a coil in one of the coil repeater assemblies 1500 in the stacked arrangement 1600. As illustrated in FIG. 18B, the wireless charging repeater circuit 1850 also includes one or more tuning capacitor(s) CR electrically coupled to each end of one of the coils L. When combined in a stacked arrangement, the coils L provide the coil LR of the wireless charging repeater circuit 1850 and the capacitors C provide the tuning capacitor CR. In embodiments the wireless charging repeater circuit 1850 can include additional components not shown in FIG. 18B. While the example wireless charging repeater circuit 1850 as illustrated in FIG. 18B shows three coils/tuning capacitors (representing three stacked coil assemblies), it will be understood that or fewer or additional coils/tuning capacitors (representing fewer or additional stacked coil assemblies), can be included in any particular embodiment of the wireless charging repeater circuit 1850.

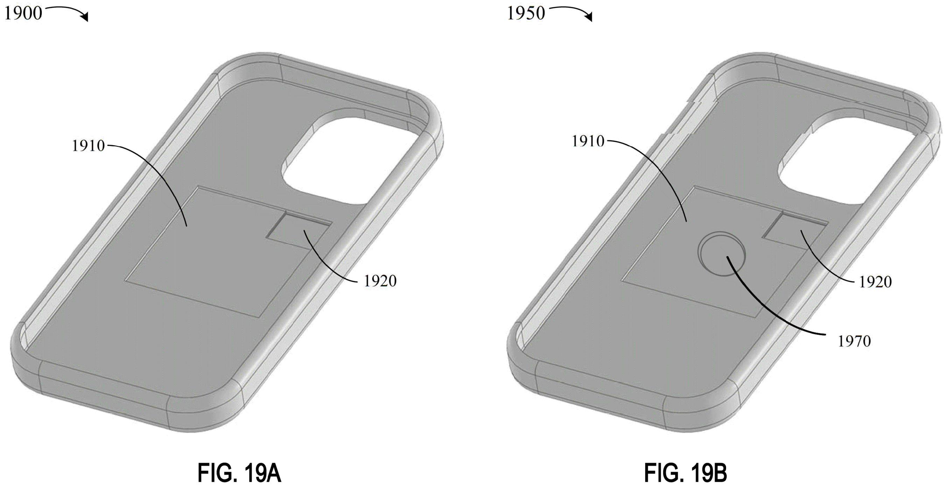

FIGs. 19A-19B provide diagrams illustrating examples of a case body 800 and a case body 850 for a mobile device case according to one or more embodiments, with reference to components and features described herein including but not limited to the figures and associated description. Each of the case body 1900 and the case body 1950 are alternative examples for use in a mobile device case (such as, e.g., the mobile device case 1400 in FIG. 14, already discussed). As shown in FIG. 19A, the case body 1900 includes a first recessed region 1910 and a second recessed region 1920, where the depth of the second recessed region 1920 is different (e.g., deeper) than the depth of the first recessed region 1910. The first recessed region 1910 is similar to the recessed region 1415 (FIG. 14, already discussed), such that in embodiments the recessed region 1910 is of a depth that matches (at least approximately) the thickness of most of the coil repeater assembly - except for, e.g., an area where the tuning capacitor(s) or other circuitry of the wireless charging repeater circuit that is in the coil repeater assembly are located). The second recessed region 1920 is located in an area that corresponds to the location of the tuning capacitor(s) or other circuitry. In embodiments the second recessed region 1920 is of a depth that matches (at least approximately) the thickness of the portion of the coil repeater assembly that includes tuning capacitor(s) or other circuitry. Thus, together the first recessed region 1910 and the second recessed region 1920 hold the coil repeater assembly (such as the coil repeater assembly 1420 in FIG. 14, already discussed).

Turning now to FIG. 19B, the illustrated case body 1950 typically includes the features of the case body 1900 (FIG. 19A) (i.e., the first recessed region 1910 and the second recessed region 1920), along with a third recessed region 1970. The third recessed region 1970 is typically deeper than the first recessed region 1910. The third recessed region 1970 is located in an area that corresponds to the location of a magnetic core (e.g., the magnetic core 1610 in FIG. 16, already discussed) in the wireless charging repeater circuit that is in the coil repeater assembly. In embodiments the third recessed region 1970 is of a depth that matches (at least approximately) the thickness of the portion of the coil repeater assembly that includes the magnetic core. In some embodiments, the case body 1950 includes the first recessed region 1910 and third recessed region 1970 but not the second recessed region 1920 (e.g., use of thin film capacitor(s) as the tuning capacitor(s)).

Each of the case body 1900 and the case body 1950 is designed to be attached to a mobile device (such as, e.g., the mobile device 1430 in FIG. 14) - for example, by snapping onto the back of the mobile device. Thus, the particular configuration and dimensions of the case body 1900 and/or the case body 1950 will depend on the configuration and dimensions of the mobile device - which in turn can depend on the manufacturer and/or model of the mobile device. Further, in embodiments, when a mobile device case with the case body 1900 or the case body 1950 is attached to the mobile device, the center of the coil LR of the wireless charging repeater circuit is aligned (at least approximately) with the center of the wireless charging coil in the mobile device. The location of the wireless charging coil can depend on the manufacturer and model of the mobile device and, thus, the location of the coil repeater assembly (and of the first recessed region 1910 to hold the greater portion of the coil repeater assembly) on or within the interior surface of the case body 1900 and/or the case body 1950 can likewise be positioned based on the manufacturer and model of the mobile device for which the case body 1900 and/or the case body 1950 is intended to fit.

In embodiments, the case body 1900 and/or the case body 1950 also include cutouts or spaces to permit use of various features of the mobile device while the mobile device case is attached thereto. As one example, if the mobile device is a smartphone with a camera, the case body 1900 and/or the case body 1950 can include an opening to allow external light to enter a camera sensor in the mobile device, thus enabling use of the camera while the mobile device case is attached.

In operation, with a mobile device case having the case body 1900 or the case body 1950 attached to the mobile device (such as, e.g., the mobile device 1430), the mobile device case is placed in proximity to an external wireless charger (such as, e.g., the external charger 1210 in FIGs. 12-13, already discussed), such that the external wireless charger, the with a coil repeater assembly having a wireless charging repeater circuit (part of the mobile device case) - and the mobile device form a wireless charging configuration (e.g., such as, e.g., the wireless charging configuration 1300 in FIG. 13, already discussed). As such, the wireless charging configuration operates as described with reference to the such as, e.g., the wireless charging configuration 1300 in FIG. 13. In particular, when exposed to a changing magnetic field from the external wireless charger, the wireless charging repeater circuit of the coil repeater assembly operates to generate a magnetic field that passes (e.g., permeates or radiates) into the wireless charging coil (e.g., the coil L2) in the mobile device.

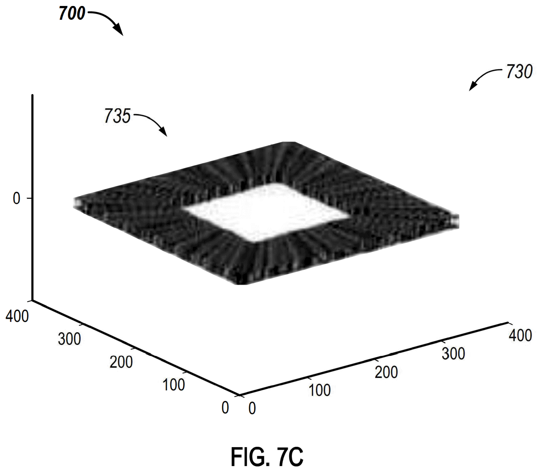

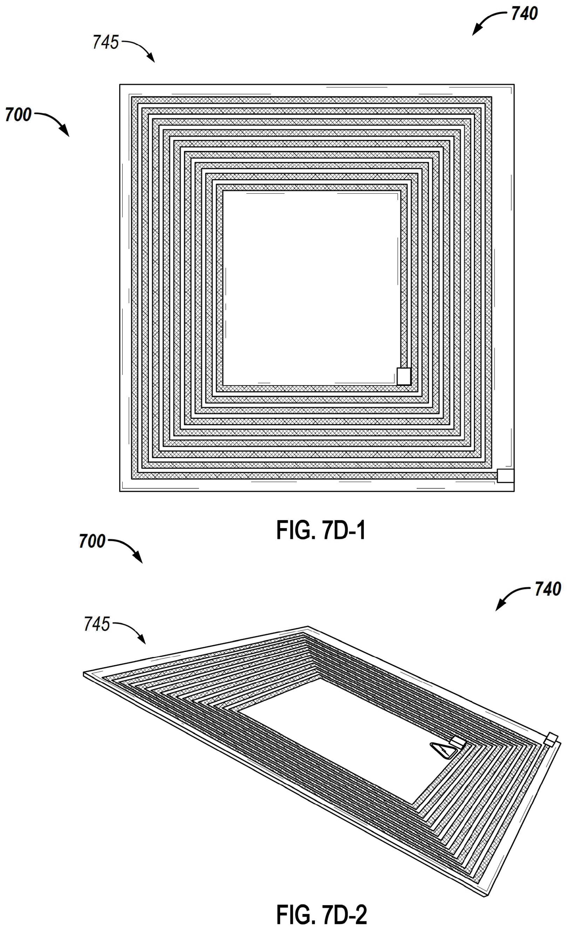

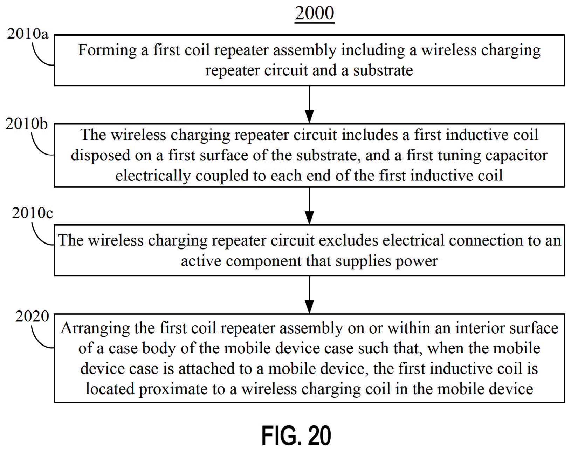

FIG. 20 provides a flow diagram illustrating an example method 900 of constructing a mobile device case with a coil repeater assembly for wireless charging according to one or more embodiments, with reference to components and features described herein including but not limited to the figures and associated description. In embodiments, the mobile device case corresponds to one or more of the mobile device case 1400 (FIG. 14, already discussed), the mobile device case with the case body 1900 (FIG. 19A, already discussed), and/or the mobile device case with the case body 1950 (FIG. 19B, already discussed). In embodiments, the coil repeater assembly corresponds to one or more of the coil repeater assembly 1420 (FIG. 14, already discussed), the coil repeater assembly 1500 (FIG. 15, already discussed), the coil repeater assembly 1600 (FIG. 16, already discussed), and/or the coil repeater assembly 1700 (FIG. 7, already discussed).

Block 2010a provides for forming a first coil repeater assembly including a wireless charging repeater circuit and a substrate, where at block 2010b the wireless charging repeater circuit includes a first inductive coil disposed on a first surface of the substrate, and a first tuning capacitor electrically coupled to each end of the first inductive coil, and where at block 2010c the wireless charging repeater circuit excludes electrical connection to an active component that supplies power. Block 2020 provides for arranging the first coil repeater assembly on or within an interior surface of a case body of the mobile device case such that, when the mobile device case is attached to a mobile device, the first inductive coil is located proximate to a wireless charging coil in the mobile device. In embodiments, the wireless charging repeater circuit corresponds to the wireless charging repeater circuit 1310 (FIG. 13, already discussed).

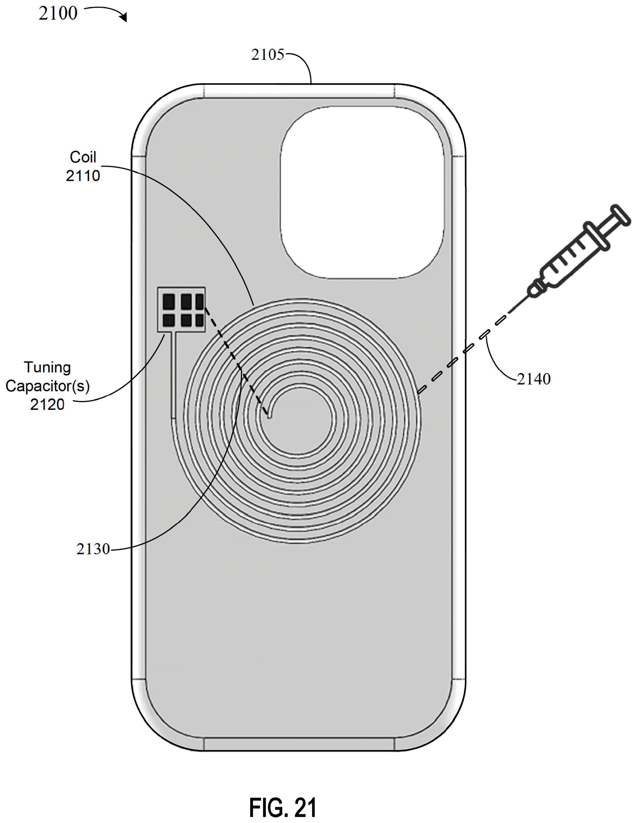

FIG. 21 provides a diagram illustrating an example of a mobile device case 2100 with a microchannel coil for wireless charging according to one or more embodiments, with reference to components and features described herein including but not limited to the figures and associated description. As illustrated in FIG. 21, the mobile device case 2100 includes a case body 2105 having an inductive coil 2110, along with one or more tuning capacitor(s) 1220. The inductive coil 2110 is a conductor-filled microchannel coil formed in the case body 2105 - e.g., in the interior surface of the case body 2105. For example, in embodiments the inductive coil 2110 is formed in the case body by molding a microchannel coil into the case body 2105 and then injecting a conductive liquid (e.g., liquid metal) 2140 into the microchannel coil. In embodiments, the injected liquid metal remains in liquid (or semi-liquid) state, such that the inductive coil 2110 remains flexible or pliable - which, in turn, enables use in a case body that is flexible or pliable.

In some embodiments, the microchannel coil that provides the inductive coil 2110 is formed within the case body 2105 via injection molding, three-dimensional (3D) printing, or other processes. The microchannel coil can be formed or refined via laser cutting, micro- milling or other techniques. Once the microchannel coil has been formed and/or refined, next a conductive fluid or paste is injected into the microchannel coil, and then the microchannel coil is sealed via 3D printing, epoxy curing or other techniques for sealing. In some embodiments, the microchannel coil is formed and the metal fluid/paste is placed in the microchannel coil which is then sealed, all via 3D printing, where materials are switched between non-conductive and conductive materials during the 3D printing process to create the microchannel coil (e.g., in the case body formed with a non-conductive material) that is filled with a conductive material (e.g., metallic liquid or paste) then sealed (e.g., with a non-conductive material).

In some embodiments, a magnetic core (e.g. a ferrite core, not shown in FIG. 21) is arranged in the center of the microchannel coil of the inductive coil 2110. Such a magnetic core operates as described herein with reference to the magnetic core 1610 (FIG. 16, already discussed). In some embodiments, the magnetic core is placed in the center of the microchannel coil via 3D printing (e.g., as part of an integrated 3D printing process). In some embodiments, the magnetic core is made of a thin magnetic plate (e.g., a thin ferrite plate) which is placed at the center of the microchannel coil, e.g. in a recessed region/cavity (not shown in FIG. 21). For example, the recessed region can be similar to the recessed region 1970 (FIG. 19B, already discussed) designed to hold the thin magnetic plate in the center of the microchannel coil.

The inductive coil 2110 and the tuning capacitor(s) 2120 form a wireless charging repeater circuit that corresponds to the wireless charging repeater circuit 1310 (FIG. 13, already discussed). As such, the inductive coil 2110 corresponds to the inductive coil LR (FIG. 13, already discussed), and the tuning capacitor(s) 2120 correspond to the capacitor CR (FIG. 2, already discussed). The tuning capacitor(s) 2120 are electrically coupled to each end of the inductive coil 2110. For example, in embodiments one end of the tuning capacitor(s) 2120 are coupled to a near end of the inductive coil 2110, and the other end of the tuning capacitor(s) 2120 are coupled to a far end of the inductive coil 2110 via an electronic path 2130 (e.g., a metallic wire or metallic wire trace embedded in the case body 2105). Notably, however, in all embodiments the wireless charging repeater circuit excludes electrical connection to any active component (including components such as, e.g., a battery, solar cell or other power source) that supplies power. The components LR and CR of the wireless charging repeater circuit are selected such that the resonant frequency of the wireless charging repeater circuit matches (at least approximately) the resonant frequency fC of the external charger and/or the resonant frequency of the wireless power receiver of the mobile device. The tuning capacitor(s) 2120 can include one or more physical capacitors (e.g., connected in parallel), and can include thin film capacitor(s). In some embodiments, the case body 2105 includes a recessed region to hold the tuning capacitor(s) 2120. In some embodiments, the case body 2105 includes a socket to hold at least one of the plurality of physical capacitors, where the at least one of the plurality of physical capacitors is removeable. The socket is electrically coupled or connected to each end of the inductive coil 2110 to provide electrical coupling or connectivity of the tuning capacitor(s) 2120 to each end of the coil 2110.

The case body 2105 is designed to be attached to a mobile device (such as, e.g., the mobile device 1430 in FIG. 14) - for example, by snapping onto the back of the mobile device. Thus, the particular configuration and dimensions of the case body 2105 will depend on the configuration and dimensions of the mobile device - which in turn can depend on the manufacturer and/or model of the mobile device. In embodiments, the case body 2105 also includes cutouts or spaces to permit use of various features of the mobile device while the mobile device case 2100 is attached thereto. As one example, if the mobile device is a smartphone with a camera, the case body 2105 can include an opening to allow external light to enter a camera sensor in the mobile device, thus enabling use of the camera while the mobile device case 2100 is attached.

The inductive coil 2110 is manufactured within the case body 2105 such that, when the mobile device case 2100 is attached to the mobile device, the inductive coil 2110 of the wireless charging repeater circuit is located proximate to a wireless charging coil (e.g., the coil L2) in the mobile device. For example, in embodiments, when the mobile device case 2100 is attached to the mobile device, the coil 2110 is located parallel to and within a short distance from the wireless charging coil in the mobile device. Further, the center of the coil 2110 is aligned (at least approximately) with the center of the wireless charging coil in the mobile device. The location of the wireless charging coil can depend on the manufacturer and model of the mobile device and, thus, the location of the coil 2110 within the case body 2105 can likewise be positioned based on the manufacturer and model of the mobile device for which the case body 2105 is intended to fit. As described above, in certain embodiments the inductive coil may comprise one of the PCB coils / trace bundles described in conjunction with FIGs. 1-11.

In operation, with the mobile device case 2100 attached to the mobile device (such as, e.g., the mobile device 1430), the mobile device case 2100 is placed in proximity to an external wireless charger (such as, e.g., the external charger 1210 in FIGs. 12-13, already discussed), such that the external wireless charger, the wireless charging repeater circuit (part of the mobile device case 2100) - and the mobile device form a wireless charging configuration (e.g., such as, e.g., the wireless charging configuration 1300 in FIG. 13, already discussed). As such, the wireless charging configuration operates as described with reference to the wireless charging configuration 1300 in FIG. 13. In particular, when exposed to a changing magnetic field from the external wireless charger, the wireless charging repeater circuit operates to generate a magnetic field that passes (e.g., permeates or radiates) into the wireless charging coil (e.g., the coil L2) in the mobile device.

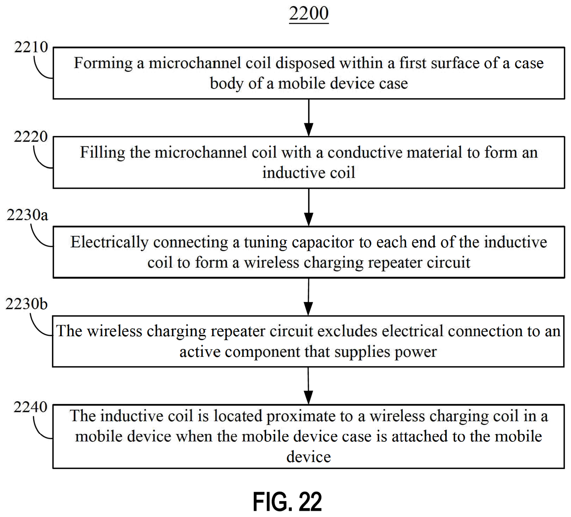

FIG. 22 provides a flow diagram illustrating an example method 2200 of constructing a mobile device case with a coil repeater assembly for wireless charging according to one or more embodiments, with reference to components and features described herein including but not limited to the figures and associated description. Block 2210 provides for forming a microchannel coil disposed within a first surface of a case body of a mobile device case. Block 2220 provides for filling the microchannel coil with a conductive material to form an inductive coil. As described above, in certain embodiments the inductive coil may comprise one of the PCB coils / trace bundles described in conjunction with FIGs. 1-11. In some embodiments, the conductive material is a metal in liquid or paste form. Block 2230a provides for electrically connecting a tuning capacitor to each end of the inductive coil to form a wireless charging repeater circuit, where at block 2230b the wireless charging repeater circuit excludes electrical connection to an active component that supplies power. Block 2240 provides that the inductive coil is located proximate to a wireless charging coil in a mobile device when the mobile device case is attached to the mobile device. In embodiments, the wireless charging repeater circuit corresponds to the wireless charging repeater circuit 1310 (FIG. 13, already discussed).

### Flexible Sticker Coil Repeater Assembly For Mobile Device Case

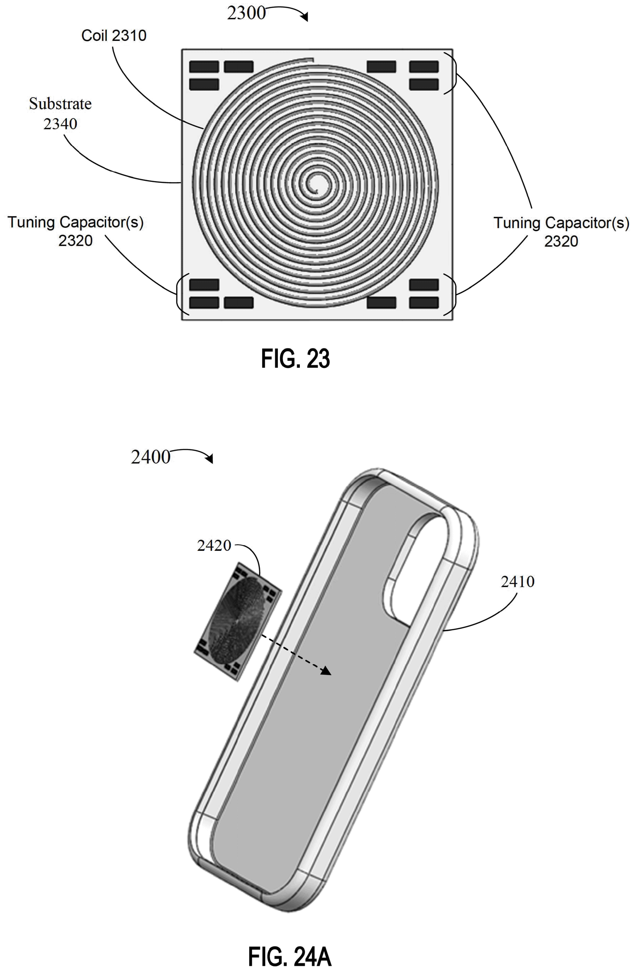

FIG. 23 provides a diagram illustrating an example of a coil repeater assembly 2300 for wireless charging according to one or more embodiments, with reference to components and features described herein including but not limited to the figures and associated description.

The coil repeater assembly 2300 is to be placed on a surface of a mobile device case body (such as, e.g., a case body for a mobile device case as described below with reference to FIGs. 24A- 24C herein) and/or a back surface of a mobile device (such as the mobile device 1430 of FIG. 14, already discussed). In embodiments the coil repeater assembly 2300 is the same as or similar to the coil repeater assembly 1420 (FIG. 14, already discussed) and/or the coil repeater assembly 1500 (FIGs. 15A-15B, already discussed).

As shown in FIG. 23, the coil repeater assembly 2300 includes an inductive coil 2310, one or more tuning capacitor(s) 2320, and a substrate 2340. The tuning capacitor(s) 2320 are electrically coupled to each end of the coil 2310, and the inductive coil 2310 and the one or more tuning capacitor(s) 2320 form a wireless charging repeater circuit that corresponds to the wireless charging repeater circuit 1310 (FIG. 13, already discussed). As such, the inductive coil 2310 corresponds to the inductive coil LR (FIG. 13), and the tuning capacitor(s) 2320 correspond to the capacitor CR (FIG. 13). Notably, however, in all embodiments the wireless charging repeater circuit excludes electrical connection to any active component (including components such as, e.g., a battery, solar cell or other power source) that supplies power. The components LR and CR of the wireless charging repeater circuit are selected such that the resonant frequency of the wireless charging repeater circuit matches (at least approximately) the resonant frequency fC of the external charger and/or the resonant frequency of the wireless power receiver of the mobile device.

The substrate 2340 provides a supporting structure to hold or position the wireless charging repeater circuit (or components thereof), such as the inductive coil 2310 and/or the tuning capacitor(s) 2320. For example, in embodiments the inductive coil 2310 is disposed on a first surface of the substrate 2340 (e.g., via techniques for thin film / flexible film circuitry), and the tuning capacitor(s) 2320 are electrically coupled to each end of the first inductive coil. In embodiments the tuning capacitor(s) 2320 are also disposed on the first surface of the substrate 2340 (e.g., via techniques for thin film / flexible film circuitry). The substrate 2340 includes an adhesive disposed on a second surface of the substrate 2340, where the second surface of the substrate 2340 is on an opposite side of the substrate 2340 relative to the first surface. In embodiments the adhesive is a common adhesive such as, e.g., a acrylic-based adhesive, a silicone-based adhesive, an epoxy-based adhesive, etc.

In some embodiments the substrate 2340 includes one or more of a thin flexible polymer or a paper (e.g., flexible) material. Accordingly, in some embodiments, when the substrate 2340 is a flexible material the coil repeater assembly 2300 can be considered as a flexible sticker to be attached to a surface of a case body and/or a mobile device via the adhesive on the second surface of the substrate 2340. In some embodiments the thin flexible polymer for the substrate 2340 is a thin polyimide polymer suitable for use as a dielectric substrate in flexible printed circuits. An example of a suitable substrate material includes a thin polyimide such as Kapton^{®} (from DuPont); other examples of suitable substrate materials include polyethylene terephthalate (PET) or polydimethylsiloxane (PDMS). These materials are flexible and dielectric.

In some embodiments the substrate 2340 is a multilayer film for which some circuit elements are disposed on an outer and other circuit elements are disposed an inner layer (e.g., one or more conductor layers of a PCB coil / trace bundle as described above in conjunction with FIGs. 1-11). Electrical connections can be made between layers, e.g., using via holes, electrical interconnectors, etc.

In some embodiments the substrate 2340 includes a thin rigid material. In such embodiments the coil repeater assembly 2300 can be attached to a surface of a case body and/or a mobile device via the adhesive on the second surface of the substrate 2340. In some embodiments, the thin rigid material is formed from a PCB material (e.g., FR4) where the circuit elements (e.g., the inductive coil 2310 and/or the tuning capacitor(s) 2320) are disposed on one surface (e.g., a front surface) and the opposite surface (e.g., a back surface) is etched away to obtain the desired thickness.

In some embodiments, the thickness of the substrate 2340 is less than approximately 0.1 mm (e.g., approximately 4 mils) such that, when the coil repeater assembly 2300 is placed on an inside surface of a mobile device case body and/or a back surface of a mobile device, the coil repeater assembly 2300 does not interfere with attaching the case body to the mobile device case. In some embodiments, the thickness of the substrate 2340 is an order of magnitude thinner than a mobile device case body (e.g., one-tenth). In some embodiments, where a case body thickness is in a range of 1-3 mm, the thickness of the substrate 2340 is within a range of approximately 0.1 mm to 0.3 mm (e.g., a range of approximately 4 to 12 mils).

As described above, in some embodiments the inductive coil 2310 may comprise one of the PCB coils / trace bundles described above in conjunction with FIGs. 1-11

For example, in certain embodiments inductive coil 2310 may comprise: (1) a first conductor layer comprising first trace segments; (2) a second conductor layer comprising second trace segments; and (3) interlayer connectors electrically interconnecting segments of the first trace segments to segments of the second trace segments to form traces. Here, substrate 2340 may comprise an insulating layer disposed between the two conductor layers. As alluded to above, each trace of the formed traces may comprise a respective subset of the first trace segments electrically interconnected by a subset of the interlayer connectors to a corresponding subset of second trace segments such that the interconnected trace segments are woven through and around substrate 2340. Accordingly, the traces may form as a conductive line woven through and around substrate 2340 to form the inductive coil 2310 of the coil repeater assembly 2300. In some of these embodiments, density of the traces may vary across a length of the inductive coil 2310. For example, a first density of the traces at a first location on the inductive coil 2310 may be greater than a second density of the traces at a second location on the inductive coil 2310, wherein the first location is closer to a center of the inductive coil 2310 than the second location. As a related example, the density of the traces may be greater at higher current locations of the inductive coil 2310 than lower current locations of the inductive coil 2310. As described above, the density of the traces may be based on at least one of: (a) spacing between trace segments of a respective conductor layer; and (b) spacing between the interlayer connectors. As described above, a trace segment of a respective conductor layer may extend in a linear direction and parallel to other trace segments of the respective conductor layer. Relatedly, first trace segments of the first conductor layer may cross over the second trace segments of the second conductor layer (see e.g., FIGs. 1-11 above).

Related to the example embodiment for the inductive coil 2310 discussed in the previous paragraph, in certain embodiments the inductive coil 2310 may comprise turns of a trace bundle. As described above, the trace bundle may comprise traces formed from trace segments electrically interconnected by interlayer connectors. A respective trace may comprise electrically interconnected trace segments across multiple layers. Relatedly, density of the traces may vary across a length of the inductive coil 2310.

More generally, the inductive coil 2310 may comprise a metallic inductive coil winding (or windings) made of a metal such as copper, copper alloy, etc. In embodiments the inductive coil 2310 is a single layer flat design, or a multi-layer flat design, or a multiwire Litz wire shape design, etc. In some embodiments the inductive coil 2310 is part of an ink circuit that is disposed on the substrate 2340 via an ink printing technique using conductive ink. The ink circuit includes the coil, electrical connections, and attachment pads for any passive components such as, e.g., tuning capacitor(s). In embodiments the inductive coil 2310 is the same as or similar to the inductive coil 1510 (FIG. 15A, already discussed).

The one or more tuning capacitor(s) 2320 are thin film capacitors (e.g., thin chip capacitors), typically made of ceramic; the capacitor(s) 2320 can be multilayer ceramic with a high dielectric property. The one or more capacitors 2320 are selected based on the particular requirements for the wireless charging repeater circuit of the coil repeater assembly 2300 such as, e.g., capacitance value, size/space considerations, etc. In embodiments one or more tuning capacitor(s) 2320 the same as or similar to the one or more tuning capacitor(s) 1520 (FIGs. 15A- 15B, already discussed).

FIGs. 24A-24C provide diagrams illustrating examples of mobile device cases with a coil repeater assembly for wireless charging according to one or more embodiments, with reference to components and features described herein including but not limited to the figures and associated description. Turning to FIG. 24A, the illustrated mobile device case 2400 includes a case body 2410 and a coil repeater assembly 2420 that is positioned on a surface (e.g., interior surface) of the case body 2410. The mobile device case 2400 is configured to be attached to a mobile device such as, e.g., the mobile device 1220 (FIGs. 12 and 13, already discussed) or the mobile device 1430 (FIG. 14, already discussed). For example, in some embodiments the mobile device case body 2410 is designed such that the mobile device case 2400 snaps onto the back of the mobile device. The mobile device, thus, includes a wireless charging coil L2 (for example, the location of the coil L2 in the mobile device 1430 is indicated by the dotted circle 1435 in FIG. 14).

In embodiments the case body 2410 is a standard or stock case body (e.g., a preexisting mobile device case body) made for attachment to a particular model of a mobile device. Thus, the particular configuration and dimensions of the case body 2410 will depend on the configuration and dimensions of the mobile device (e.g., the mobile device 1430) - which in turn can depend on the manufacturer and/or model of the mobile device (e.g., the mobile device 1430). In embodiments, the case body 2410 also includes cutouts or spaces to permit use of various features of the mobile device while the mobile device case 2400 is attached thereto.

As one example, if the mobile device is a smartphone with a camera, the case body 2410 can include an opening to allow external light to enter a camera sensor in the mobile device, thus enabling use of the camera while the mobile device case 2400 is attached.

The coil repeater assembly 2420 is a thin assembly that includes a wireless charging repeater circuit and a substrate, with an adhesive on one surface of the substrate. The coil repeater assembly 2420 corresponds to the coil repeater assembly 2300 (FIG. 23). The wireless charging repeater circuit corresponds to the wireless charging repeater circuit 1310 (FIG. 13). As such, includes an inductive coil that corresponds to the inductive coil LR (FIG. 2), and tuning capacitor(s) that correspond to the capacitor CR (FIG. 13). Notably, however, in all embodiments the wireless charging repeater circuit excludes electrical connection to any active component (including components such as, e.g., a battery, solar cell or other power source) that supplies power.

The coil repeater assembly 2420 is attached to a surface (e.g., an interior surface) of the case body 2410 via the adhesive, such that when the mobile device case 2400 is attached to the mobile device (e.g., the mobile device 1430), the inductive coil LR of the wireless charging repeater circuit is located proximate to a wireless charging coil (e.g., the coil L2) in the mobile device. For example, in embodiments, when the mobile device case 2400 is attached to the mobile device, the coil LR is located parallel to and within a short distance from the wireless charging coil (where, for example, the location of the wireless charging coil in the mobile device 1430 is indicated by the dotted circle 1435). As one example, in some embodiments the coil LR is positioned against the back of the mobile device when the mobile device case 2400 is attached to the back of mobile device, and in some other embodiments there may be a very thin gap between the coil LR and the back of the mobile device. Further, the center of the coil LR is aligned (at least approximately) with the center of the wireless charging coil (e.g., such as illustrated in FIG. 14 by the dotted line 1440). The location of the wireless charging coil can depend on the manufacturer and model of the mobile device and, thus, the case body 2410 and the location of the coil repeater assembly 2420 (e.g., on the interior surface of the case body 2410) can likewise be positioned based on the manufacturer and model of the mobile device for which the case body 2410 is intended to fit.

The mobile device case 2400 as illustrated in FIG. 24A has a number of advantages. For example, when the coil repeater assembly 2420 is applied to the interior surface of the case body 2410, the coil repeater assembly 2420 is not visible (i.e., from a view perspective outside of the mobile device and case) when the mobile device case 2400 is attached to the mobile device. In addition, the coil repeater assembly 2420 provides for a wireless charger repeater circuit to be applied to a standard or stock mobile device case body (e.g., a preexisting mobile device case body) without the need to modify the mobile device case body.

In operation, with the mobile device case 2400 attached to the mobile device (such as, e.g., the mobile device 1430), the mobile device case 2400 is placed in proximity to an external wireless charger (such as, e.g., the external charger 1210 in FIGs. 12-13, already discussed), such that the external wireless charger, the coil repeater assembly 2420 having wireless charging repeater circuit (part of the mobile device case 2400), and the mobile device form a wireless charging configuration (e.g., such as, e.g., the wireless charging configuration 1300 in FIG. 13, already discussed). As such, the wireless charging configuration operates as described with reference to the wireless charging configuration 1300 in FIG. 13. In particular, when exposed to a changing magnetic field from the external wireless charger, the wireless charging repeater circuit operates to generate a magnetic field that passes (e.g., permeates or radiates) into the wireless charging coil (e.g., the coil L2) in the mobile device.

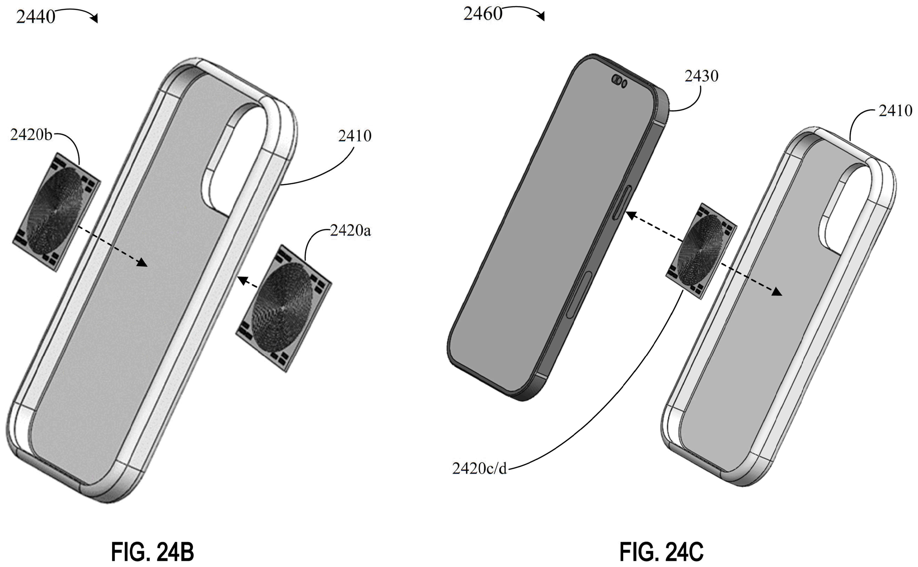

Turning now to FIG. 24B, a mobile device case 2440 is illustrated. The mobile device case 2440 has features and components that are the same as or similar to the mobile device case 2400 (FIG. 24A) which will not be repeated herein except as to describe the mobile device case 2440. The illustrated mobile device case 2440 includes a case body 2410 and at least one coil repeater assembly 2420 (e.g., the coil repeater assembly 2420a as shown in FIG. 24B). The coil repeater assembly 2420a is positioned on a surface (e.g., an exterior surface) of the case body 2410. The coil repeater assembly 2420a is attached to a surface (e.g., an exterior surface) of the case body 2410 via the adhesive, such that when the mobile device case 2440 is attached to the mobile device (e.g., the mobile device 330), the inductive coil LR of the wireless charging repeater circuit is located proximate to a wireless charging coil (e.g., the coil L2) in the mobile device. For example, in embodiments, when the mobile device case 2440 is attached to the mobile device, the coil LR is located parallel to and within a short distance from the wireless charging coil (where, for example, the location of the wireless charging coil in the mobile device 1430 is indicated by the dotted circle 1435). Further, the center of the coil LR is aligned (at least approximately) with the center of the wireless charging coil (e.g., such as illustrated in FIG. 14 by the dotted line 1440).

In some embodiments, the mobile device case 2440 includes a second coil repeater assembly 2420 (e.g., the coil repeater assembly 2420b as shown in FIG. 24B) attached to the case body 2410. In some embodiments, the coil repeater assembly 2420b is positioned on an opposite surface (e.g., an interior surface) of the case body 2410 with reference to the coil repeater assembly 2420a, and the coil repeater assembly 2420b is positioned and applied the same as the coil repeater assembly 2420 described herein with reference to FIG. 24A. The coil repeater assembly 2420b is attached parallel to the coil repeater assembly 2420a, such that the coils of each coil repeater assembly are in alignment. When coil repeater assemblies 2420 are stacked as such, any connections that might be needed between them can be made, e.g., using via holes in each substrate. Each of the coil repeater assembly 2420a and/or the coil repeater assembly 2420b corresponds to the coil repeater assembly 2300 (FIG. 23).

In operation, with the mobile device case 2440 attached to the mobile device (e.g., the mobile device 1430), the mobile device case 2440 is placed in proximity to an external wireless charger (such as, e.g., the external charger 1210 in FIGs. 12-13, already discussed), such that the external wireless charger, the coil repeater assembly 2420 having a wireless charging repeater circuit (part of the mobile device case 2440) and the mobile device form a wireless charging configuration (e.g., such as, e.g., the wireless charging configuration 1300 in FIG. 13, already discussed). As such, the wireless charging configuration operates as described with reference to the wireless charging configuration 1300 in FIG. 13. In particular, when exposed to a changing magnetic field from the external wireless charger, the wireless charging repeater circuit of the coil repeater assembly 2420 operates to generate a magnetic field that passes (e.g., permeates or radiates) into the wireless charging coil (e.g., the coil L2) in the mobile device.

Turning now to FIG. 24C, a mobile device arrangement 2460 is illustrated. The mobile device arrangement 2460 has features and components that are the same as or similar to the arrangement described with reference to the mobile device case 2400 (FIG. 24A) and/or the arrangement described with reference to the mobile device case 2440 (FIG. 24B), which will not be repeated herein except as to describe the mobile device case arrangement 2460. As shown in FIG. 24C, a mobile device 2430 has a coil repeater assembly 2420 (e.g., indicated in FIG. 24C as the coil repeater assembly 2420c) attached via the adhesive to an exterior surface (e.g., the back surface) of the mobile device 2430. In embodiments the mobile device 2430 corresponds to the mobile device 1430 (FIG. 14, already discussed). When applied to the mobile device 2430, the inductive coil LR of the wireless charging repeater circuit (of the coil repeater assembly 2420c) is located proximate to a wireless charging coil (e.g., the coil L2) in the mobile device 2430. For example, in embodiments the coil LR is located parallel to and within a short distance from the wireless charging coil (where, for example, the location of the wireless charging coil in the mobile device is indicated by the dotted circle 1435 as illustrated in FIG. 14). Further, the center of the coil LR is aligned (at least approximately) with the center of the wireless charging coil (e.g., such as illustrated in FIG. 14 by the dotted line 1440).

In some embodiments, there is no coil repeater assembly 2420 applied to the case body 2410 (and, in some embodiments, there may be no mobile device case attached to the mobile device 2430). In some embodiments, a second coil repeater assembly 2420 (e.g., the coil repeater assembly 2420d as shown in FIG. 24C) is applied to the case body 2410. For example, in some embodiments, the coil repeater assembly 2420d is applied to an interior surface of the case body 2410, where the coil repeater assembly 2420d is positioned and applied the same as the coil repeater assembly 2420 described herein with reference to FIG. 24A. In some embodiments, the coil repeater assembly 2420d is applied to an exterior surface of the case body 2410, where the coil repeater assembly 2420d is positioned and applied the same as the coil repeater assembly 2420a described herein with reference to FIG. 24b. Each of the coil repeater assembly 2420c and/or the coil repeater assembly 2420d corresponds to the coil repeater assembly 2300 (FIG. 23). In some embodiments, a coil repeater assembly 2420 is applied to the surface of an external wireless charger (not shown in FIG. 24C) in addition to or instead of application to the mobile device.

In operation, the mobile device 2430 (with or without a mobile device case attached) is placed in proximity to an external wireless charger (such as, e.g., the external charger 1210 in FIGs. 12-13, already discussed), such that the external wireless charger, the coil repeater assembly 2420 having a wireless charging repeater circuit and the mobile device form a wireless charging configuration (e.g., such as, e.g., the wireless charging configuration 1300 in FIG. 13, already discussed). As such, the wireless charging configuration operates as described with reference to the wireless charging configuration 1300 in FIG. 13. In particular, when exposed to a changing magnetic field from the external wireless charger, the wireless charging repeater circuit of the coil repeater assembly 2420 operates to generate a magnetic field that passes (e.g., permeates or radiates) into the wireless charging coil (e.g., the coil L2) in the mobile device.

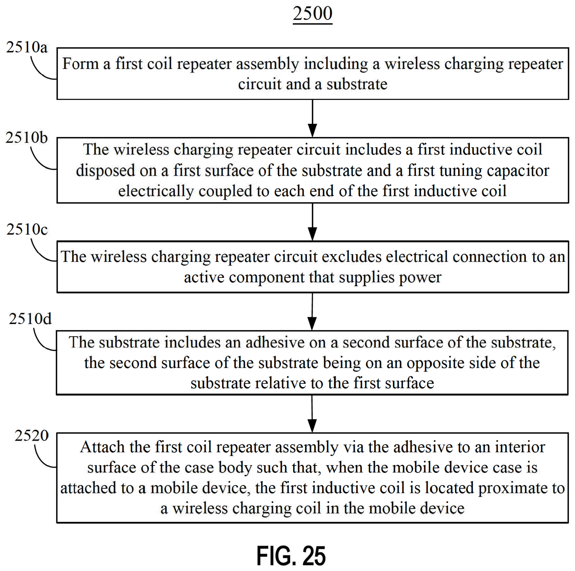

FIG. 25 provides a flow diagram illustrating an example method of constructing a mobile device case with a coil repeater assembly for wireless charging according to one or more embodiments, with reference to components and features described herein including but not limited to the figures and associated description. Block 2510a provides for forming a first coil repeater assembly comprising a wireless charging repeater circuit and a substrate, where at block 2510b the wireless charging repeater circuit includes a first inductive coil disposed on a first surface of the substrate and a first tuning capacitor electrically coupled to each end of the first inductive coil, at block 2510c the wireless charging repeater circuit excludes electrical connection to an active component that supplies power, and at block 2510d the substrate includes an adhesive on a second surface of the substrate, the second surface of the substrate being on an opposite side of the substrate relative to the first surface. Block 2520 provides for attaching the first coil repeater assembly via the adhesive to an interior surface of the case body such that, when the mobile device case is attached to a mobile device, the first inductive coil is located proximate to a wireless charging coil in the mobile device.

In some embodiments, the substrate includes one or more of a thin flexible polymer or a paper material. That is, the paper can be layered with the thin flexible polymer. In some embodiments, the substrate includes a thin rigid material.

As alluded to above, in some embodiments the first inductive coil may comprise one of the PCB coils / trace bundles described above in conjunction with FIGs. 1-11.

For example, in certain embodiments the first inductive coil may comprise: (1) a first conductor layer comprising first trace segments; (2) a second conductor layer comprising second trace segments; and (3) interlayer connectors electrically interconnecting segments of the first trace segments to segments of the second trace segments to form traces. Here, the substrate may comprise an insulating layer disposed between the two conductor layers. As alluded to above, each trace of the formed traces may comprise a respective subset of the first trace segments electrically interconnected by a subset of the interlayer connectors to a corresponding subset of second trace segments such that the interconnected trace segments are woven through and around the substrate. Accordingly, the traces may form as a conductive line woven through and around the substrate to form the first inductive coil of the first coil repeater assembly. In some of these embodiments, density of the traces may vary across a length of the first inductive coil. For example, a first density of the traces at a first location on the first inductive coil may be greater than a second density of the traces at a second location on the first inductive coil, wherein the first location is closer to a center of the first inductive coil than the second location. As a related example, the density of the traces may be greater at higher current locations of the first inductive coil than lower current locations of the first inductive coil. As described above, the density of the traces may be based on at least one of: (a) spacing between trace segments of a respective conductor layer; and (b) spacing between the interlayer connectors. As described above, a trace segment of a respective conductor layer may extend in a linear direction and parallel to other trace segments of the respective conductor layer. Relatedly, first trace segments of the first conductor layer may cross over the second trace segments of the second conductor layer (see e.g., FIGs. 1-11 above).

Related to the example embodiment for the first inductive coil discussed in the previous paragraph, in certain embodiments the first inductive coil may comprise turns of a trace bundle. As described above, the trace bundle may comprise traces formed from trace segments electrically interconnected by interlayer connectors. A respective trace may comprise electrically interconnected trace segments across multiple layers. Relatedly, density of the traces may vary across a length of the first inductive coil.

In some embodiments, the first inductive coil may be an ink-printed coil. In some embodiments, the first inductive coil is a multi- layer ink-printed coil, wherein a second layer of the multi-layer ink-printed coil is disposed on a second substrate parallel to the substrate.

In some embodiments, the method further includes forming a second coil repeater assembly including a second inductive coil (of the same/similar construction as the first inductor coil) disposed on a first surface of a second substrate, and a second tuning capacitor electrically coupled to each end of the second inductive coil, where the second inductive coil and the second tuning capacitor are part of the wireless charging repeater circuit and where the second substrate includes an adhesive on a second surface of the second substrate, the second surface of the second substrate being on an opposite side of the second substrate relative to the first surface of the second substrate, and attaching the second coil repeater assembly via the adhesive on the second substrate to an exterior surface of the case body, the exterior surface of the case body being on an opposite side of the case body relative to the first surface of the case body, such that the second inductive coil is located proximate to the first inductive coil.

### In-Vehicle Applications

In embodiments, a coil repeater assembly 2300 is attached via the adhesive to a surface of a vehicle proximate to (e.g., adjacent to) a wireless charger in the vehicle. For example, in some embodiments the coil repeater assembly 2300 is attached to a surface of the vehicle where a mobile device would (otherwise) be placed for wireless charging. When placed in proximity to a wireless charger in the vehicle, the inductive coil LR of the wireless charging repeater circuit (part of the coil repeater assembly 2300) is located proximate to a wireless charger driver coil of the wireless charger (e.g., corresponding to the coil L1 in FIG. 2) in the vehicle. Thus, for example, in embodiments the coil LR is located parallel to and within a short distance from the wireless charger driver coil (e.g., the coil L1 in FIG. 2) of the wireless charger. Further, the center of the coil LR is aligned (at least approximately) with the center of the wireless charger driver coil (e.g., the coil L1 in FIG. 13) of the wireless charger. Placement of the coil repeater assembly 2300 in a vehicle in such a manner provides enhancement of the wireless charging power provided to a mobile device by the wireless charger in the vehicle when the mobile device (having a wireless charging coil) is placed proximate to the wireless charger and the coil repeater assembly 2300. For example, the charging power is enhanced when the mobile device has a case attached.

In operation, a mobile device (with or without a mobile device case attached) is placed in proximity to a coil repeater assembly 2300, which is attached to a part of a vehicle (as described above) in proximity to (e.g., adjacent to) a wireless charger driver coil of a wireless charger (such as, e.g., the charger 1210 in FIGs. 12-13, already discussed) located in the vehicle -- such that the wireless charger, the coil repeater assembly 2300 having a wireless charging repeater circuit and the mobile device form a wireless charging configuration (e.g., such as, e.g., the wireless charging configuration 1300 in FIG. 13, already discussed). As such, the wireless charging configuration operates as described with reference to the wireless charging configuration 1300 in FIG. 13. In particular, when exposed to a changing magnetic field from the wireless charger driver coil of the in-vehicle wireless charger, the wireless charging repeater circuit of the coil repeater assembly 2300 operates to generate a magnetic field that passes (e.g., permeates or radiates) into the wireless charging coil (e.g., the coil L2) in the mobile device.

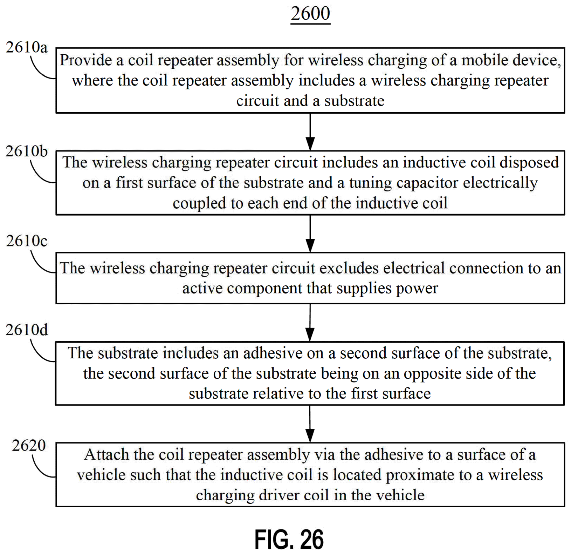

FIG. 26 provides a flow diagram illustrating an example method of providing wireless charging for a mobile device in a vehicle according to one or more embodiments, with reference to components and features described herein including but not limited to the figures and associated description. At block 2610a a coil repeater assembly for wireless charging of a mobile device is provided, where the coil repeater assembly includes a wireless charging repeater circuit and a substrate, where at block 2610b the wireless charging repeater circuit includes an inductive coil disposed on a first surface of the substrate and a tuning capacitor electrically coupled to each end of the inductive coil, at block 2610c the wireless charging repeater circuit excludes electrical connection to an active component that supplies power, and at block 2610d the substrate includes an adhesive on a second surface of the substrate, the second surface of the substrate being on an opposite side of the substrate relative to the first surface. Block 2620 provides for attaching the coil repeater assembly via the adhesive to a surface of a vehicle such that the inductive coil is located proximate to a wireless charging driver coil in the vehicle.

In some embodiments, the substrate includes one or more of a thin flexible polymer or a paper material. In some embodiments, the substrate includes a thin rigid material.

As alluded to above, in some embodiments the inductive coil may comprise one of the PCB coils / trace bundles described above in conjunction with FIGs. 1-11.

For example, in certain embodiments the inductive coil may comprise: (1) a first conductor layer comprising first trace segments; (2) a second conductor layer comprising second trace segments; and (3) interlayer connectors electrically interconnecting segments of the first trace segments to segments of the second trace segments to form traces. Here, the substrate may comprise an insulating layer disposed between the two conductor layers. As alluded to above, each trace of the formed traces may comprise a respective subset of the first trace segments electrically interconnected by a subset of the interlayer connectors to a corresponding subset of second trace segments such that the interconnected trace segments are woven through and around the substrate. Accordingly, the traces may form as a conductive line woven through and around the substrate to form the inductive coil of the coil repeater assembly. In some of these embodiments, density of the traces may vary across a length of the inductive coil. For example, a first density of the traces at a first location on the inductive coil may be greater than a second density of the traces at a second location on the inductive coil, wherein the first location is closer to a center of the inductive coil than the second location. As a related example, the density of the traces may be greater at higher current locations of the inductive coil than lower current locations of the inductive coil. As described above, the density of the traces may be based on at least one of: (a) spacing between trace segments of a respective conductor layer; and (b) spacing between the interlayer connectors. As described above, a trace segment of a respective conductor layer may extend in a linear direction and parallel to other trace segments of the respective conductor layer. Relatedly, first trace segments of the first conductor layer may cross over the second trace segments of the second conductor layer (see e.g.,FIGs. 1-11 above).

Related to the example embodiment for the inductive coil discussed in the previous paragraph, in certain embodiments the inductive coil may comprise turns of a trace bundle. As described above, the trace bundle may comprise traces formed from trace segments electrically interconnected by interlayer connectors. A respective trace may comprise electrically interconnected trace segments across multiple layers. Relatedly, density of the traces may vary across a length of the inductive coil.

In some embodiments, the inductive coil may be an ink-printed coil. In some embodiments, the inductive coil is a multi-layer ink-printed coil, where a layer of the multi-layer ink-printed coil is disposed on a second substrate parallel to the substrate.

As described herein a coil repeater assembly (e.g., the coil repeater assembly 1420, the coil repeater assembly 1500, the coil repeater assembly 1600, the coil repeater assembly 1700, the coil repeater assembly 2300 and/or the coil repeater assembly 2420) can be placed in various configurations in or on a mobile device case body, on a mobile device, or elsewhere. As such, based on design criteria and the design of the respective mobile device case and mobile device, in some embodiments the coil repeater assembly is located closer to the wireless charging coil in the mobile device, and in other embodiments the coil repeater assembly is located closer to the wireless charging driver coil of the wireless charger. When the coil repeater assembly is located closer to the wireless charging coil in the mobile device, the wireless charging repeater circuit operates to concentrate the magnetic field (e.g., magnetic flux) emitted by the wireless charger into the wireless charging coil in the mobile device. When the coil repeater assembly is located closer to the wireless charging driver coil of the wireless charger, the wireless charging repeater circuit operates to redirect a larger portion of the magnetic field (e.g., magnetic flux) emitted by the wireless charger into the wireless charging coil in the mobile device.

### Additional Notes and Examples:

Example A1 includes a mobile device case for attachment to a mobile device, comprising a case body, and a first coil repeater assembly comprising a wireless charging repeater circuit and a substrate, wherein the wireless charging repeater circuit comprises a first inductive coil disposed on a first surface of the substrate, and a first tuning capacitor electrically coupled to each end of the first inductive coil, wherein the wireless charging repeater circuit excludes electrical connection to an active component that supplies power, wherein the first coil repeater assembly is arranged on or within an interior surface of the case body such that, when the mobile device case is attached to a mobile device, the first inductive coil is located proximate to a wireless charging coil in the mobile device.

Example A2 includes the mobile device case of Example A1, wherein the substrate comprises a printed circuit board.

Example A3 includes the mobile device case of Example A1, wherein the substrate comprises a thin film and the wireless charging coil repeater circuit includes a flexible circuit or a thin film circuit.

Example A4 includes the mobile device case of Example A1, wherein the first coil repeater assembly includes a magnetic core located in the center of the first inductive coil.

Example A5 includes the mobile device case of Example A1, further comprising a first recessed region in the case body to hold at least a portion of the first coil repeater assembly.

Example A6 includes the mobile device case of Example A5, further comprising a second recessed region in the case body to hold a component of the wireless charging repeater circuit, wherein the second recessed region has a depth different than a depth of the first recessed region.

Example A7 includes the mobile device case of Example A1, wherein the first tuning capacitor comprises a plurality of physical capacitors connected in parallel.

Example A8 includes the mobile device case of Example A7, wherein the case body includes a socket to hold at least one of the plurality of physical capacitors, and wherein the at least one of the plurality of physical capacitors is removeable.

Example A9 includes the mobile device case of Example A1, further comprising a second coil repeater assembly located parallel to the first coil repeater assembly, wherein the second coil repeater assembly comprises a second substrate including a second inductive coil disposed on a first surface of the second substrate, and a second tuning capacitor electrically coupled to each end of the second inductive coil, wherein the second inductive coil and the second tuning capacitor are part of the wireless charging repeater circuit.

Example MA1 includes a method of constructing a mobile device case for attachment to a mobile device, comprising forming a first coil repeater assembly comprising a wireless charging repeater circuit and a substrate, wherein the wireless charging repeater circuit comprises a first inductive coil disposed on a first surface of the substrate, and a first tuning capacitor electrically coupled to each end of the first inductive coil, wherein the wireless charging repeater circuit excludes electrical connection to an active component that supplies power, and arranging the first coil repeater assembly on or within an interior surface of a case body of a mobile device case such that, when the mobile device case is attached to a mobile device, the first inductive coil is located proximate to a wireless charging coil in the mobile device.

Example MA2 includes the method of Example MA1, further comprising arranging a magnetic core in the center of the first inductive coil.

Example MA3 includes the method of Example MA1, further comprising arranging at least a portion of the first coil repeater assembly within a first recessed region in the case body.

Example MA4 includes the method of Example MA3, further comprising arranging a component of the wireless charging repeater circuit within a second recessed region in the case body, wherein the second recessed region has a depth different than a depth of the first recessed region.

Example MA5 includes the method of Example MA1, wherein the first tuning capacitor comprises a plurality of physical capacitors connected in parallel, wherein at least one of the plurality of physical capacitors is removeable, and wherein the method further comprises arranging at least one of the plurality of physical capacitors in a socket in the case body.

Example MA6 includes the method of Example MA1, further comprising arranging a second coil repeater assembly located parallel to the first coil repeater assembly, wherein the second coil repeater assembly comprises a second substrate including a second inductive coil disposed on a first surface of the second substrate, and a second tuning capacitor electrically coupled to each end of the second inductive coil, and wherein the second inductive coil and the second tuning capacitor are part of the wireless charging repeater circuit.

Example B1 includes a mobile device case for attachment to a mobile device, comprising a case body, a wireless charging repeater circuit comprising an inductive coil, and a tuning capacitor electrically coupled to each end of the inductive coil, wherein the wireless charging repeater circuit excludes electrical connection to an active component that supplies power, wherein the inductive coil comprises a conductor-filled microchannel coil formed in the case body such that, when the mobile device case is attached to a mobile device, the inductive coil is located proximate to a wireless charging coil in the mobile device.

Example B2 includes the mobile device case of Example B1, wherein the conductor- filled microchannel coil comprises a metallic material that is a liquid or paste.

Example B3 includes the mobile device case of Example B1, further comprising a magnetic core located in the center of the microchannel coil.

Example B4 includes the mobile device case of Example B1, further comprising a recessed region in the case body to hold the tuning capacitor of the wireless charging repeater circuit.

Example B5 includes the mobile device case of Example B1, wherein the tuning capacitor comprises a plurality of physical capacitors connected in parallel.

Example B6 includes the mobile device case of Example B5, wherein the case body includes a socket to hold at least one of the plurality of physical capacitors, and wherein the at least one of the plurality of physical capacitors is removeable.

Example MB1 includes a method of constructing a mobile device case for attachment to a mobile device, comprising forming a microchannel coil disposed within a first surface of a case body of a mobile device case, filling the microchannel coil with a conductive material to form an inductive coil, and electrically connecting a tuning capacitor to each end of the inductive coil to form a wireless charging repeater circuit, wherein the wireless charging repeater circuit excludes electrical connection to an active component that supplies power, wherein the inductive coil is located proximate to a wireless charging coil in a mobile device when the mobile device case is attached to the mobile device.

Example MB2 includes the method of Example MB1, wherein the conductor-filled microchannel comprises a metallic material that is a liquid or paste.

Example MB3 includes the method of Example MB1, wherein the microchannel coil is formed within the first surface of the case body via injection molding or three- dimensional (3D) printing.

Example MB4 includes the method of Example MB1, wherein the microchannel coil is sealed after being filled with the conductive material.

Example MB5 includes the method of Example MB1, further comprising arranging a magnetic core in the center of the microchannel coil.

Example MB6 includes the method of Example MB1, wherein the tuning capacitor comprises a plurality of physical capacitors connected in parallel, wherein at least one of the plurality of physical capacitors is removeable, and wherein the method further comprises arranging at least one of the plurality of physical capacitors in a socket in the case body.

Example C1 includes a mobile device case for attachment to a mobile device, comprising a case body, and a first coil repeater assembly comprising a wireless charging repeater circuit and a substrate, wherein the wireless charging repeater circuit comprises a first inductive coil disposed on a first surface of the substrate, and a first tuning capacitor electrically coupled to each end of the first inductive coil, wherein the wireless charging repeater circuit excludes electrical connection to an active component that supplies power, and wherein the substrate includes an adhesive disposed on a second surface of the substrate, the second surface of the substrate being on an opposite side of the substrate relative to the first surface, wherein the first coil repeater assembly is attached via the adhesive to an interior surface of the case body such that, when the mobile device case is attached to a mobile device, the first inductive coil is located proximate to a wireless charging coil in the mobile device.

Example C2 includes the mobile device case of Example C1, wherein the substrate comprises one or more of a thin flexible polymer or a paper material.

Example C3 includes the mobile device case of Example C1 or C2, wherein the substrate comprises a thin rigid material.

Example C4 includes the mobile device case of any of Examples C1-C3, wherein the first inductive coil is an ink-printed coil.

Example C5 includes the mobile device case of any of Examples C1-C4, wherein the first inductive coil is a multi-layer ink-printed coil, wherein a second layer of the multi- layer ink-printed coil is disposed on a second substrate parallel to the substrate.

Example C6 includes the mobile device case of any of Examples C1-C5, wherein the first inductive coil is a litz coil comprising one or more layers.

Example C7 includes the mobile device case of any of Examples C1-C6, further comprising a second coil repeater assembly located parallel to the first coil repeater assembly, wherein the second coil repeater assembly comprises a second inductive coil disposed on a first surface of a second substrate, and a second tuning capacitor electrically coupled to each end of the second inductive coil, wherein the second inductive coil and the second tuning capacitor are part of the wireless charging repeater circuit, wherein the second substrate includes an adhesive on a second surface of the second substrate, the second surface of the second substrate being on an opposite side of the second substrate relative to the first surface of the second substrate, and wherein the second coil repeater assembly is attached via the adhesive on the second substrate to an exterior surface of the case body, the exterior surface of the case body being on an opposite side of the case body relative to the first surface of the case body, such that the second inductive coil is located proximate to the first inductive coil.

Example MC1 includes a method of constructing a mobile device case comprising forming a first coil repeater assembly comprising a wireless charging repeater circuit and a substrate, wherein the wireless charging repeater circuit comprises a first inductive coil disposed on a first surface of the substrate, and a first tuning capacitor electrically coupled to each end of the first inductive coil, wherein the wireless charging repeater circuit excludes electrical connection to an active component that supplies power, and wherein the substrate includes an adhesive on a second surface of the substrate, the second surface of the substrate being on an opposite side of the substrate relative to the first surface, and attaching the first coil repeater assembly via the adhesive to an interior surface of the case body such that, when the mobile device case is attached to a mobile device, the first inductive coil is located proximate to a wireless charging coil in the mobile device.

Example MC2 includes the method of Example MC1, wherein the substrate comprises one or more of a thin flexible polymer or a paper material.

Example MC3 includes the method of Example MC1 or MC2, wherein the substrate comprises a thin rigid material.

Example MC4 includes the method of any of Examples MC1-MC3, wherein the first inductive coil is an ink-printed coil.

Example MC5 includes the method of any of Examples MC1-MC4, wherein the first inductive coil is a multi-layer ink-printed coil, wherein a second layer of the multi-layer ink-printed coil is disposed on a second substrate parallel to the substrate.

Example MC6 includes the method of any of Examples MC1-MC5, wherein the first inductive coil is a litz coil comprising one or more layers.

Example MC7 includes the method of any of Examples MC1-MC6, further comprising forming a second coil repeater assembly comprising a second inductive coil disposed on a first surface of a second substrate, and a second tuning capacitor electrically coupled to each end of the second inductive coil, and wherein the second inductive coil and the second tuning capacitor are part of the wireless charging repeater circuit, and wherein the second substrate includes an adhesive on a second surface of the second substrate, the second surface of the second substrate being on an opposite side of the second substrate relative to the first surface of the second substrate, and attaching the second coil repeater assembly via the adhesive on the second substrate to an exterior surface of the case body, the exterior surface of the case body being on an opposite side of the case body relative to the first surface of the case body, such that the second inductive coil is located proximate to the first inductive coil.

Example D1 includes a coil repeater assembly for wireless charging of a mobile device, comprising a wireless charging repeater circuit, and a substrate, wherein the wireless charging repeater circuit comprises an inductive coil disposed on a first surface of the substrate, and a tuning capacitor electrically coupled to each end of the first inductive coil, wherein the wireless charging repeater circuit excludes electrical connection to an active component that supplies power, and wherein the substrate includes an adhesive on a second surface of the substrate, the second surface of the substrate being on an opposite side of the substrate relative to the first surface.

Example D2 includes the coil repeater assembly of Example D1, wherein the substrate comprises one or more of a thin flexible polymer or a paper material.

Example D3 includes the coil repeater assembly of Example D1 or D2, wherein the substrate comprises a thin rigid material.

Example D4 includes the coil repeater assembly of any of Examples D1-D3, wherein the inductive coil is an ink-printed coil.

Example D5 includes the coil repeater assembly of any of Examples D1-D4, wherein the inductive coil is a multi-layer ink-printed coil, wherein a layer of the multi-layer ink-printed coil is disposed on a second substrate parallel to the substrate.

Example D6 includes the coil repeater assembly of any of Examples D1-D5, wherein the inductive coil is a litz coil comprising one or more layers.

Example MD1 includes a method comprising providing a coil repeater assembly for wireless charging of a mobile device, wherein the coil repeater assembly comprises a wireless charging repeater circuit, and a substrate, wherein the wireless charging repeater circuit comprises an inductive coil disposed on a first surface of the substrate, and a tuning capacitor electrically coupled to each end of the inductive coil, wherein the wireless charging repeater circuit excludes electrical connection to an active component that supplies power, and wherein the substrate includes an adhesive on a second surface of the substrate, the second surface of the substrate being on an opposite side of the substrate relative to the first surface, and attaching the coil repeater assembly via the adhesive to a surface of a vehicle such that the inductive coil is located proximate to a wireless charging driver coil in the vehicle.

Example MD2 includes the method of Example MD1, wherein the substrate comprises one or more of a thin flexible polymer or a paper material.

Example MD3 includes the method of Example MD1 or MD2, wherein the substrate comprises a thin rigid material.

Example MD4 includes the method of any of Examples MD1-MD3, wherein the inductive coil is an ink-printed coil.

Example MD5 includes the method of any of Examples MD1-MD4, wherein the inductive coil is a multi-layer ink-printed coil, wherein a layer of the multi-layer ink-printed coil is disposed on a second substrate parallel to the substrate.

Example MD6 includes the method of any of Examples MD1-MD5, wherein the inductive coil is a litz coil comprising one or more layers.

In some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single- ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

As used herein, the terms circuit and component might describe a given unit of functionality that can be performed in accordance with one or more embodiments of the present application. As used herein, a component might be implemented utilizing any form of hardware, software, or a combination thereof. For example, one or more processors, controllers, ASICs, PLAs, PALs, CPLDs, FPGAs, logical components, software routines or other mechanisms might be implemented to make up a component. Various components described herein may be implemented as discrete components or described functions and features can be shared in part or in total among one or more components. In other words, as would be apparent to one of ordinary skill in the art after reading this description, the various features and functionality described herein may be implemented in any given application. They can be implemented in one or more separate or shared components in various combinations and permutations. Although various features or functional elements may be individually described or claimed as separate components, it should be understood that these features/functionality can be shared among one or more common software and hardware elements. Such a description shall not require or imply that separate hardware or software components are used to implement such features or functionality.

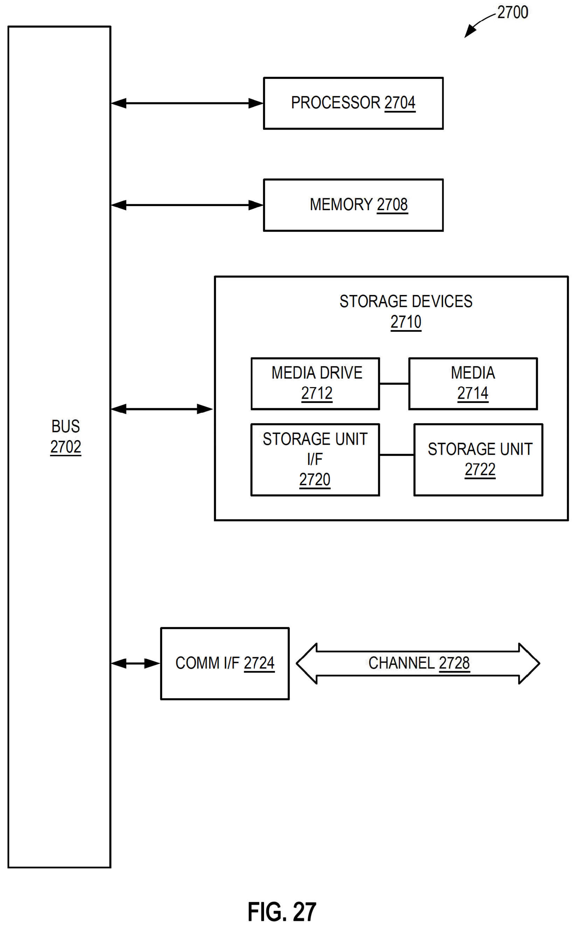

Where components are implemented in whole or in part using software, these software elements can be implemented to operate with a computing or processing component capable of carrying out the functionality described with respect thereto. One such example computing component is shown in FIG. 27. Various embodiments are described in terms of this example-computing component 2700. For example, computing component 2700 may be implemented to execute trace design system or portions thereof. After reading this description, it will become apparent to a person skilled in the relevant art how to implement the application using other computing components or architectures.

Referring now to FIG. 27, computing component 2700 may represent, for example, computing or processing capabilities found within a self-adjusting display, desktop, laptop, notebook, and tablet computers. They may be found in hand-held computing devices (tablets, PDA's, smart phones, cell phones, palmtops, etc.). They may be found in workstations or other devices with displays, servers, or any other type of special-purpose or general-purpose computing devices as may be desirable or appropriate for a given application or environment. Computing component 2700 might also represent computing capabilities embedded within or otherwise available to a given device. For example, a computing component might be found in other electronic devices such as, for example, portable computing devices, and other electronic devices that might include some form of processing capability.

Computing component 2700 might include, for example, one or more processors, controllers, control components, or other processing devices. This can include a processor, and/or any one or more of the components making up trace design system and/or wireless charging system 1100. Processor 1704 might be implemented using a general-purpose or special-purpose processing engine such as, for example, a microprocessor, controller, or other control logic. Processor 1704 may be connected to a bus 1702. However, any communication medium can be used to facilitate interaction with other components of computing component 2700 or to communicate externally.

Computing component 2700 might also include one or more memory components, simply referred to herein as main memory 2708. For example, random access memory (RAM) or other dynamic memory, might be used for storing information and instructions to be executed by processor 2704. Main memory 2708 might also be used for storing temporary variables or other intermediate information during execution of instructions to be executed by processor 2704. Computing component 2700 might likewise include a read only memory ("ROM") or other static storage device coupled to bus 2702 for storing static information and instructions for processor 2704.

The computing component 2700 might also include one or more various forms of information storage mechanism 2710, which might include, for example, a media drive 2712 and a storage unit interface 2720. The media drive 2712 might include a drive or other mechanism to support fixed or removable storage media 2714. For example, a hard disk drive, a solid-state drive, a magnetic tape drive, an optical drive, a compact disc (CD) or digital video disc (DVD) drive (R or RW), or other removable or fixed media drive might be provided. Storage media 2714 might include, for example, a hard disk, an integrated circuit assembly, magnetic tape, cartridge, optical disk, a CD or DVD. Storage media 2714 may be any other fixed or removable medium that is read by, written to or accessed by media drive 2712. As these examples illustrate, the storage media 2714 can include a computer usable storage medium having stored therein computer software or data.

In alternative embodiments, information storage mechanism 2710 might include other similar instrumentalities for allowing computer programs or other instructions or data to be loaded into computing component 2700. Such instrumentalities might include, for example, a fixed or removable storage unit 2722 and an interface 2720. Examples of such storage units 2722 and interfaces 2720 can include a program cartridge and cartridge interface, a removable memory (for example, a flash memory or other removable memory component) and memory slot. Other examples may include a PCMCIA slot and card, and other fixed or removable storage units 2722 and interfaces 2720 that allow software and data to be transferred from storage unit 2722 to computing component 2700.

Computing component 2700 might also include a communications interface 2724. Communications interface 2724 might be used to allow software and data to be transferred between computing component 2700 and external devices. Examples of communications interface 2724 might include a modem or soft modem, a network interface (such as Ethernet, network interface card, IEEE 802.XX or other interface). Other examples include a communications port (such as for example, a USB port, IR port, RS232 port Bluetooth^{®} interface, or other port), or other communications interface. Software/data transferred via communications interface 2724 may be carried on signals, which can be electronic, electromagnetic (which includes optical) or other signals capable of being exchanged by a given communications interface 2724. These signals might be provided to communications interface 2724 via a channel 2728. Channel 2728 might carry signals and might be implemented using a wired or wireless communication medium. Some examples of a channel might include a phone line, a cellular link, an RF link, an optical link, a network interface, a local or wide area network, and other wired or wireless communications channels.

In this document, the terms "computer program medium" and "computer usable medium" are used to generally refer to transitory or non-transitory media. Such media may be, e.g., memory 2708, storage unit 2722, media 2714, and channel 2728. These and other various forms of computer program media or computer usable media may be involved in carrying one or more sequences of one or more instructions to a processing device for execution. Such instructions embodied on the medium, are generally referred to as "computer program code" or a "computer program product" (which may be grouped in the form of computer programs or other groupings). When executed, such instructions might enable the computing component 2700 to perform features or functions of the present application as discussed herein.

It should be understood that the various features, aspects and functionality described in one or more of the individual embodiments are not limited in their applicability to the particular embodiment with which they are described. Instead, they can be applied, alone or in various combinations, to one or more other embodiments, whether or not such embodiments are described and whether or not such features are presented as being a part of a described embodiment. Thus, the breadth and scope of the present application should not be limited by any of the above-described exemplary embodiments.

Terms and phrases used in this document, and variations thereof, unless otherwise expressly stated, should be construed as open ended as opposed to limiting. As examples of the foregoing, the term "including" should be read as meaning "including, without limitation" or the like. The term "example" is used to provide exemplary instances of the item in discussion, not an exhaustive or limiting list thereof. The terms "a" or "an" should be read as meaning "at least one," "one or more" or the like; and adjectives such as "conventional," "traditional," "normal," "standard," "known." Terms of similar meaning should not be construed as limiting the item described to a given time period or to an item available as of a given time. Instead, they should be read to encompass conventional, traditional, normal, or standard technologies that may be available or known now or at any time in the future. Where this document refers to technologies that would be apparent or known to one of ordinary skill in the art, such technologies encompass those apparent or known to the skilled artisan now or at any time in the future.

The term "coupled" may be used herein to refer to any type of relationship, direct or indirect, between the components in question, and may apply to electrical, mechanical, fluid, optical, electromagnetic, electromechanical or other connections, including logical connections via intermediate components (e.g., device A may be coupled to device C via device B). In addition, the terms "first", "second", etc. may be used herein only to facilitate discussion, and carry no particular temporal or chronological significance unless otherwise indicated.

The presence of broadening words and phrases such as "one or more," "at least," "but not limited to" or other like phrases in some instances shall not be read to mean that the narrower case is intended or required in instances where such broadening phrases may be absent. The use of the term "component" does not imply that the aspects or functionality described or claimed as part of the component are all configured in a common package. Indeed, any or all of the various aspects of a component, whether control logic or other components, can be combined in a single package or separately maintained and can further be distributed in multiple groupings or packages or across multiple locations.

Additionally, the various embodiments set forth herein are described in terms of exemplary block diagrams, flow charts and other illustrations. As will become apparent to one of ordinary skill in the art after reading this document, the illustrated embodiments and their various alternatives can be implemented without confinement to the illustrated examples. For example, block diagrams and their accompanying description should not be construed as mandating a particular architecture or configuration.

## Claims

1. A mobile device case (1400) comprising:
a case body (1410); and
a coil repeater assembly (1420) attached to an interior surface of the case body (1410) such that, when the mobile device case (1400) is attached to a mobile device (1430), an inductive coil (100) of the coil repeater assembly (1420) is located proximate to a wireless charging coil (L2) in the mobile device (1430), wherein the coil repeater assembly (1420) comprises:
a first conductor layer (124) comprising first trace segments (112);
a second conductor layer (120) comprising second trace segments (114) ;
an insulating layer (126) disposed between the first and second conductor layers; and
interlayer connectors (116) electrically interconnecting segments of the first trace segments (112) to segments of the second trace segments (114) to form traces (110), wherein:
each trace of the formed traces (110) comprises a respective subset of the first trace segments electrically interconnected by a subset of the interlayer connectors to a corresponding subset of the second trace segments such that the interconnected trace segments are woven through and around the insulating layer (126), and
the traces (110) are formed as a conductive line woven through and around the insulating layer (126) to form the inductive coil (100) of the coil repeater assembly (1420).

2. The mobile device case (1400) of claim 1, wherein density of the traces (110) varies across a length of the inductive coil (100).

3. The mobile device case (1400) of claim 2, wherein a first density of the traces (110) at a first location on the inductive coil (100) is greater than a second density of the traces (110) at a second location on the inductive coil (100), wherein the first location is closer to a center of the inductive coil (100) than the second location.

4. The mobile device case (1400) of claim 2 or 3, wherein the density of the traces (110) is greater at higher current locations of the inductive coil (100) than lower current locations of the inductive coil (100).

5. The mobile device case (1400) of any one of claims 2 to 4, wherein the density of the traces (110) is based on spacing between trace segments of a respective conductor layer (120, 124).

6. The mobile device case (1400) of any one of claims 2 to 5, wherein the density of the traces (110) is based on spacing between the interlayer connectors (116).

7. The mobile device case (1400) of any one of claims 1 to 6, wherein a trace segment of a respective conductor layer (120, 124) extends in a linear direction and parallel to other trace segments of the respective conductor layer (120, 124).

8. The mobile device case (1400) of any one of claims 1 to 7, wherein the first trace segments of the first conductor layer (124) cross over the second trace segments of the second conductor layer (120).

9. The mobile device case (1400) of any one of claims 1 to 8, wherein the interlayer connectors (116) are disposed on an outer perimeter of the insulating layer (126).

10. The mobile device case (1400) of any one of claims 1 to 9, wherein the interlayer connectors (116) comprise through vias filled with a conductive material (620).

11. The mobile device case (1400) of any one of claims 1 to 10, wherein the coil repeater assembly (1420) further comprises:
a substrate (1540) disposed between the inductive coil (100) and the interior surface of the case body (1410); and
a tuning capacitor (1520) electrically coupled to each end of the inductive coil (100).

12. The mobile device case (1400) of any one of claims 1 to 11, wherein the coil repeater assembly (1420) excludes electrical connection to an active component that supplies power.

13. The mobile device case (1400) of claim 11 or 12, wherein the substrate comprises an adhesive that attaches the substrate (1540) to the interior surface of the case body (1410).

14. The mobile device case (1400) of claim 13, wherein the substrate (1540) and the adhesive are non-conductive.

15. The mobile device case (1400) of any one of claims 1 to 14, wherein the traces (110) are ink-printed.

16. A mobile device case (1400) comprising:
a case body (1410); and
a coil repeater assembly (1420) attached to an interior surface of the case body (1410) such that, when the mobile device case (1400) is attached to a mobile device(1430), an inductive coil (100) of the coil repeater assembly (1420) is located proximate to a wireless charging coil (L2) in the mobile device (1430), wherein the coil repeater assembly comprises:
the inductive coil (100) comprising turns of a trace bundle; and
the trace bundle comprising traces formed from trace segments electrically interconnected by interlayer connectors (116), a respective trace comprising electrically interconnected trace segments across multiple layers, wherein density of the traces varies across a length of the inductive coil (100).

17. The mobile device case (1400) of claim 16, wherein a first density of the traces at a first location on the inductive coil (100) is greater than a second density of the traces at a second location on the inductive coil (100), wherein the first location is closer to a center of the inductive coil than the second location.

18. The mobile device case (1400) of claim 16, wherein the density of the traces is greater at higher current locations of the inductive coil (100) than lower current locations of the inductive coil (100).

19. A coil repeater assembly (1420) for wireless charging of a battery (1228), the coil repeater assembly (1420) comprising:
a substrate (1540);
an adhesive disposed on a first surface of the substrate (1540); and
a wireless charging repeater circuit (1310) on a second surface of the substrate (1540) opposite the first surface of the substrate (1540), wherein the wireless charging repeater circuit (1310) comprises:
an inductive coil (100) comprising turns of a trace bundle; and
the trace bundle comprising traces formed from trace segments electrically interconnected by interlayer connectors (116), a respective trace comprising electrically interconnected trace segments across multiple layers, wherein density of the traces varies across a length of the inductive coil (100).

20. The coil repeater assembly (1420) of claim 19, wherein a first density of the traces at a first location on the inductive coil (100) is greater than a second density of the traces at a second location on the inductive coil (100), wherein the first location is closer to a center of the inductive coil than the second location.
